# EUROPÄISCHE PATENTANMELDUNG

(11) **EP 1 359 514 A2**
(43) Veröffentlichungstag der Anmeldung: **05.11.2003**
(21) Anmeldenummer: 03007376.1
(22) Anmeldetag: 02.04.2003
(51) Int. Cl.: G06F 17/24

(54) **Drucken mit variablen Daten unter Verwendung von Varianten**

(30) Priorität: 09.04.2002 US 118770
(71) Anmelder: NexPress Solutions LLC, Rochester, NY 14653-7103 (US)
(72) Erfinder: Donahue, Timothy F., Mendon, NY 14506 (US); Kloosterman, David, Penfield, NY 14526 (US)
(74) Vertreter: Franzen, Peter

(57) **Zusammenfassung**

Verfahren und Vorrichtung (2) zum Erzeugen eines Druckauftrags mit variablen Daten, der eine Vielzahl zu druckender Dokumente beinhaltet, wobei jedes der Dokumente durch Variantenelemente bestimmt ist, die sich auf Inhalt, Layout und Produktzweck beziehen. Es werden Gruppen erzeugt und durch übereinstimmende Varianten in dem Dokument bestimmt, die sich auf Layout und Produktzweck beziehen. Mindestens ein Parameter, der sich auf die Varianten bezieht, wird als ein Auswahlkriterium benutzt, um eine Vielzahl von Untergruppen zu bilden. Die Untergruppen werden dann zum Drucken nach der Form der Auswahlkriterien angeordnet.

## Beschreibung

Die vorliegende Erfindung betrifft die Verarbeitung von Druckaufträgen mit variablen Daten und insbesondere die Verwendung von Varianten in jedem zu druckenden Dokument, um abgeleitete Druckaufträge in einer gewünschten Weise zu erzeugen.

Das Drucken mit variablen Daten, das so genannte Variable Data Printing (VDP), ist eine Form des Druckens, die individuelle Drucksachen erzeugt, von denen jede Druckseite Informationen enthält, die auf einen individuellen Empfänger abgestimmt sind. Die VDP-Erstellung verbindet die grafische Aufbereitung der Seite mit dem Bereich der Informationstechnologie, um ein Mittel bereitzustellen, das Druckaufträge mit variablen Daten erzeugt, die in einen oder in mehrere Druckproduktionsprozesse einfließen, in denen die gedruckten und weiterverarbeiteten Drucksachen erzeugt werden. Diese einen VDP-Auftrag umfassenden Falldokumente (Instance Documents) mit variablem Inhalt werden auf Basis von Daten erstellt, die aus einer Datenbank mit Informationssätzen stammen, die die individuellen Empfänger charakterisieren. Für das grafische Gewerbe und für das Druckgewerbe sieht man das Potenzial von VDP in einer ausgeprägten 1:1-Marketingkommunikation, ähnlich wie dies bereits aus der 1:1-Marketingpraxis mit Kommunikationsmedien, wie dem Internet, bekannt ist.

Ein allgemeines Problem von VDP besteht darin, dass ein RIP (Raster Image Processor) zum Rastern und Drucken von Druckaufträgen mit variablen Daten normalerweise längere Zeit benötigt als bei konventionellen statischen Druckaufträgen mit nicht variablen Daten. Variable Druckdaten werden an einen RIP gesendet, wo der Code für die Text- und Grafikelemente in ein Rasterdatenformat umgesetzt wird, das von der Markierungsvorrichtung (marking engine) eines Digitaldruckers verwendbar ist. Daher muss auf jeder Seite mit variablen Daten jedes Codeelement mit dem RIP gerastert werden. Durch die Notwendigkeit, die Elemente mit variablen Daten einzeln rastern zu müssen, entsteht ein erheblicher Verarbeitungsengpass im Vergleich mit der Rasterung statischer Druckaufträge, die ein einzelnes Dokument umfassen, das nur einmal gerastert zu werden braucht, worauf eine Vielzahl von Kopien mithilfe derselben RIP-Ausgabe bebildert werden kann.

Über das konventionelle Drucken mit variablen Daten von wechselnden Seiteninhalten für entsprechende Falldokumente hinaus ist es ebenfalls möglich, weitere Eigenschaften der Drucksachen zu verändern, wie die Weiterverarbeitungseigenschaften, u. a. der Art der Bindung und der Wahl des Trägers, die sich nach Regeln aus der besagten Empfängerdatenbank richten, die bei der bedingten Zuordnung des Seiteninhalts Verwendung finden. Auf diese Weise können Empfänger, die für die Marketingfirma, für die der VDP-Auftrag produziert wird, von höherem Wert sind, eine Drucksache auf Druckmedien höherer Qualität mit einer höherwertigen Bindung erhalten, während geringer eingeschätzte Kunden mit geringerem Wertpotenzial nur ein Dokument mit Eckheftung erhalten, das sich billiger produzieren lässt, jedoch bei dem vorgesehenen Empfänger eine ausreichende Marketingwirkung entfaltet. Das impliziert die Notwendigkeit, zusammen mit dem Seiteninhalt und den Layoutdaten weitere Daten zu speichern, die die physischen Eigenschaften jeder herzustellenden Drucksache ausdrücken und als Produktzweckdaten (product intent data) bezeichnet werden. Die Ergänzung um diese Produktzweckdaten, die die physischen Eigenschaften der weiterverarbeiteten Dokumente des VDP-Auftrags auf Basis des Datenprofils der verschiedenen Empfänger variieren können, kann den Workflow des Herstellungsprozesses in der Umgebung des Druckleistungsanbieters derart komplex werden lassen, dass dort der erforderliche Workflow möglicherweise nicht erzielbar ist. Es besteht daher ein erhebliches Problem in den Fällen, in denen ein VDP-Auftrag ohne Kenntnis über die Workflow-Möglichkeiten des Druckleistungsanbieters gestaltet wird und der zu komplex ist, als dass er produziert werden könnte.

Es besteht daher im grafischen Gewerbe der Bedarf zur Beseitigung der zuvor beschriebenen Nachteile nach dem Stand der Technik und zur Ermöglichung einer schnelleren Form von VDP bis zur Herstellung und Weiterverarbeitung der Drucksache. Es ist zudem wünschenswert, in der Druckmaschine derzeit gängige Methoden zu verwenden. Das grafische Gewerbe bedarf eines Verfahrens und einer Vorrichtung, das bzw. die einen effizienten und zuverlässigen Austausch von variablen Daten zur Verwendung in Druckaufträgen mit variablen Daten erzeugt.

Eine als Personalized Print Markup Language (PPML) bezeichnete Druckseitenbeschreibungssprache, die von der Print On Demand Initiative (PODi) entwickelt worden ist, ist ein Beispiel eines Datenformats, das das Layout der Seiten der vielen individuellen Falldokumente eines Druckauftrags mit variablen Daten darstellen kann. PPML basiert auf XML (Extensible Markup Language) und ist derart strukturiert, dass Inhaltsdaten, die unter demselben Rendering-Kontext auf einer oder auf mehreren Seiten mehrfach verwendet werden, explizit bezeichnet sind, um die Verarbeitungsleistung eines laufenden RIP-Prozesses zu optimieren. Idealerweise verarbeitet ein PPML RIP alle Inhaltselemente, einschließlich der bezeichneten wieder verwendeten und nicht wieder verwendeten Inhaltselemente ein einziges Mal, wobei die wieder verwendeten Elemente in einem Zwischenspeicher (Cache) abgelegt werden, nachdem sie das erste Mal gerastert worden sind, um dann als gerasterte Daten wieder verwendet zu werden.

Die Tatsache, dass ein Drucker-RIP gerasterte grafische Elemente nach Bedarf speichern und wieder verwenden kann, stellt eine beträchtliche Verbesserung in der Verarbeitungsleistung dar. Die Fähigkeit, diese Elemente wieder zu verwenden, erübrigt zudem die Notwendigkeit, den Quellcode, der das Inhaltselement definiert, mehrmals während desselben Druckauftrags zu dem Drucker/RIP zu senden. PPML ist für das Drucken variabler Daten ein deutlicher Fortschritt, weil es einem Drucker/RIP ermöglicht, Daten auf Objektebene anstatt auf Seitenebene zu verstehen. Einem Drucker/RIP wird somit ein gewisses Maß an Intelligenz sowie eine Manipulation der Komponenten (Objekte) ermöglicht, die eine Seite ausmachen. Codeentwickler sind zudem in der Lage, Objekte zu benennen, was die Wiederverwendung der Objekte nach Bedarf während des Druckens eines Auftrags mit variablen Daten ermöglicht.

Der Austausch variabler Daten (VDX / Variable Data Exchange) ist ein Standard, der kürzlich im CGATS (Committee for Graphics Arts Technologies Standards) als Produktionswerkzeug für variable Daten in Form eines VDX-Falls in Verbindung mit PPML definiert worden ist. Ein VDX-Fall (Instance) kann als Kompilation von Datensätzen betrachtet werden, die den Inhalt und das Layout zahlreicher Verbundseiten definieren. Diese VDX-Fälle sind in der PPML zur Erstellung der Verbunddefinitionen von PPML/VDX-Falldokumenten (Instance Document) verwendbar. Jede Verbundseite eines PPML/VDX-Falldokuments ist eine Sammlung einer oder mehrerer Teilseiten oder Inhaltsobjekte, die als Verbundelemente bezeichnet werden. PPML/VDX ermöglicht es, Verbundelemente einmal zu definieren und sich mehrmals aus den verschiedenen Verbundseiten-Layoutfällen darauf zu beziehen, um die Gesamtgröße der Daten für einen PPML/VDX-Fall wirksam zu reduzieren.

Die Layoutdaten, die die Verbundseiten eines PPML/VDX-Falles beschreiben, werden anhand einer Untermenge der zuvor beschriebenen PPML definiert. Das von dem PPML/VDX-Standard zur Definition der Verbundelement-Datenquelle benötigte Datenformat ist das Adobe Portable Document Format (PDF), das von Adobe Systems® definiert und fortgeschrieben wird. In PPML/VDX werden die PDL-Quellendaten, die ein Verbundelement definieren, das auf einem PPML-definierten Seitenlayout angeordnet ist, stets als eine Seite einer PDF-Datei ausgedrückt. PDF-Dateien, die zur Definition von PPML/VDX-Elementen dienen, müssen alle notwendigen Ressourcen enthalten, wie Schriften, Bilddaten und Farbprofile. PDF-Dateien, die zur Definition von PPML/VDX-Verbundelementen dienen, müssen zudem den gesamten Farbinhalt in einer bekannten Referenzvorrichtung oder einem geräteunabhängigen Farbraum enthalten.

VDX setzt voraus, dass die PPML-Layoutdaten eines VDX-Falls als einzelner, frei zugänglicher PDF-Objektstrom abgelegt sind, der wiederum in einer PDF-Datei gespeichert ist. Ja nach Maß der Übereinstimmung kann die PDF-Datei, in der die PPML-Daten eingebettet sind, auch einige oder möglicherweise alle PDF-Seitenobjektdefinitionen enthalten, die von dem VDX-Fall benötigt werden, der ein PPML-Layoutdatenobjekt begründet. Die PPML/VDX-Datei, die ein XML-Dokument umfasst, das wiederum die PPML- und Produktzweckdaten enthält, wird als PPML/VDX-Layoutdatei bezeichnet. PDF-Dateien, die nur PDF-Seitenobjekte enthalten, die nur zur Erzeugung von Verbundelementdefinitionen dienen und in denen keine XML-Elemente gespeichert sind und auf die aus dem PPML-Datenspeicher in einer PPML/VDX-Layoutdatei zugegriffen werden kann, werden als PPML/VDX-Inhaltsdatei bezeichnet.

Eine VDP-Auftragsdefinition, die von einer bestimmten Vorrichtung und einem Produktions-Workflow vollständig unabhängig ist, besteht aus drei Grundkomponenten, von denen zwei die Darstellung des variablen Seiteninhalts definieren, nämlich die Layoutdaten (auch als Markup bezeichnet) und die Inhaltsdaten. In einem PPML/VDX-Fall ist die Layoutkomponente durch die PPML-Daten definiert und die Inhaltskomponente ist durch die PDF-Daten definiert. Die dritte Komponente, als Produktzweckdaten bezeichnet, liefert die Beschreibung des fertigen Produkts. Die Produktzweckdaten umfassen typischerweise Informationen, wie die Art der Dokumentbindung, einseitiger und/oder beidseitiger Druck, Trägertyp und andere Attribute einer Druckproduktbeschreibung, die erforderlich sind, um einem Druckleistungsanbieter die Definition der fertigen Druckprodukte mitzuteilen, die hergestellt werden sollen. Die Produktzweckinformation definiert nicht die Steuerung eines bestimmten Fertigungsprozesses oder eine Vorrichtung, weil diese Informationen dem PPML/VDX-Ersteller normalerweise nicht bekannt sind. Diese Gerätesteuerungsparameter sind normalerweise nur dem Druckleistungsanbieter bekannt, der die ausgetauschten VDP-Auftragsdaten erhält. Der Druckleistungsanbieter muss daher die für seinen Produktions-Workflow zutreffenden Fertigungsspezifikationen aus dem Produktzweck, dem Layout und den Inhaltsdaten ableiten, die von dem Kunden erstellt worden sind.

Ein PPML/VDX-Fall wird durch einen datengesteuerten Verknüpfungsprozess erzeugt, der als Verknüpfungsvorrichtung von variablen Daten bezeichnet wird. Diese Verknüpfungsvorrichtung wird normalerweise innerhalb einer Erstellungsumgebung für variable Daten ausgeführt. Die Erstellungsumgebung kann sich an einem anderen Ort befinden als die Einrichtung, die die endgültigen Seiten der Dokumente mit variablen Daten druckt. In einigen Szenarios kann ein PPML/VDX-Fall in mehrere PPML/VDX-Fälle unterteilt sein, die sich zu verschiedenen Druckorten übertragen lassen. Die Erzeugung eines PPML/VDX-Falles durch die Verknüpfungsvorrichtung für variable Daten wird als abschließende Aktivität in dem recht komplexen Prozess zur Entwicklung von variablen Daten betrachtet. Der PPML/VDX-Fall lässt sich zu einem Druckproduktions-Workflow innerhalb derselben oder einer anderen Betriebsumgebung übertragen, in der er durch einen Druckvorstufen-Operator eingesehen werden kann, um ihn dann in einer für die endgültige Produktion vorgesehenen Form anzuordnen, die für den an dieser Stelle verwendeten Digitaldrucker geeignet ist.

Der PPML/VDX-Fall weist ein portables, ausbaufähiges Format auf, das für den Druck mit variablen Daten im Druckgewerbe ausgelegt ist. PPML/VDX ermöglicht Druckern mit dynamischen digitalen Druckeinrichtungen das Drucken mit variablen Daten, ohne Kenntnisse über 1:1-Marketing, variables Layout-Design oder Datenverarbeitung besitzen zu müssen. PPML/VDX ist jedoch ein endgültiges variables Daten- und Layoutformat, das geräteunabhängig ist. Daher unterstützt PPML/VDX nicht die Einbeziehung von Daten, die sich auf eine bestimmte Druckvorrichtung beziehen, wie Ausschießschemata, Trapping-Parameter (Unter-/Überfüllen), Traps oder Drucker- oder allgemeine Gerätesteuerungsinformationen. Daten, die bestimmte Informationen für eine Druckvorrichtung beinhalten, müssen daher später in der Druckvorstufe hinzugefügt werden, wenn der Druckauftrag für die Produktion vorbereitet wird.

Die vorausgehende Erörterung macht deutlich, dass Bedarf nach einem Verfahren und einer Vorrichtung besteht, die druckgerätespezifische Daten liefern kann, die in Verbindung mit PPML/VDX-Fällen nutzbar sind, um die Weiterentwicklung der Praxis des Druckens mit variablen Daten im Druckgewerbe zu ermöglichen.

Die vorliegende Erfindung betrifft die Probleme nach dem Stand der Technik, um die Praxis des Druckens mit variablen Daten im Druckgewerbe zu verbessern und die Produktion von VDP-Aufträgen zu erleichtern. Ein VDP-Auftrag besteht im vorliegenden Kontext der Erfindung aus Falldokumenten, die sich in Bezug auf die Art und Weise ihrer Herstellung deutlich voneinander unterscheiden. Beispielsweise können Falldokumente in ihrer Seitenlänge, in der Art der verwendeten Medien, in der Zahl der Seiten, die den Bebilderungsbereich überschreiten, in der Anzahl der Kopien und in der Weiterverarbeitung voneinander abweichen. Die Erfindung stellt eine VDP-Druckvorstufen-Workflow-Komponente dar, die dem Druckvorstufenoperator die Möglichkeit verleiht, die Daten des VDP-Auftrags zu analysieren und zu betrachten und dann den Auftrag innerhalb der digitalen Druckumgebung so einzurichten, dass der VDP-Auftrag optimal produzierbar ist.

Die erfindungsgemäße VDP-Druckvorstufen-Workflow-Komponente ist vorzugsweise ein Acrobat® Plug-in. Das Plug-in ist so konstruiert, dass jedes Merkmal für sich eigenständig ist, und dass sich die Merkmale schrittweise hinzufügen oder löschen lassen. Die VDP-Druckvorstufen-Workflow-Komponente ist in der Lage, den VDP-Auftrag für die Produktion zu analysieren, zu betrachten und vorzubereiten. Die Komponente gibt einen oder mehrere "produktionsreife" Aufträge aus.

Die zuvor genannte Aufgabe wird erfindungsgemäß durch Bereitstellen eines Verfahrens und einer Vorrichtung zum Erstellen eines Druckauftrags mit variablen Daten gelöst, der eine Vielzahl von zu druckenden Dokumenten umfasst, worin jedes der Dokumente durch Variantenelemente bestimmt ist, die sich auf den Inhalt, das Layout und den Produktzweck beziehen. Gruppen sind durch eine übereinstimmende Menge von Varianten in dem Dokument erzeugbar und bestimmbar, die sich auf das Layout und den Produktzweck beziehen. Auswahlkriterien in Form mindestens eines sich auf die Varianten beziehenden Parameters sind zur Erzeugung einer Vielzahl von Untergruppen verwendbar. Die Untergruppen werden dann für den Druck gemäß der Auswahlkriterien angeordnet.

Die Erfindung wird im folgenden anhand in der Zeichnung dargestellter Ausführungsbeispiele näher erläutert.

Es zeigen:
- Fig. 1a: eine Darstellung der Grundfunktionen, die für das Drucken mit variablen Daten nach der vorliegenden Erfindung erforderlich sind;
- Fig. 1b: eine Darstellung der bevorzugten Vorrichtung zur Ausführung der in Fig. 1a gezeigten Funktionen;
- Fig. 2: ein Diagramm zur Darstellung des Druckvorstufen-Workflows eines Druckauftrags von der Erstellung bis zur Produktion;
- Fig. 3: ein Ablaufdiagramm zur Darstellung des Verfahrens des bevorzugten Ausführungsbeispiels der vorliegenden Erfindung, das die Falldokumente kennzeichnet und diese nach gemeinsamen Eigenschaften, die als Familien bezeichnet werden, in Gruppen klassifiziert;
- Fig. 4: ein Ablaufdiagramm für die Erstellung von Familien innerhalb der vorliegenden Erfindung;
- Fig. 5: ein Ablaufdiagramm für ein optionales Verfahren, das dem Operator ermöglicht, abgeleitete Aufträge zu erstellen; und
- Fig. 6: ein Ablaufdiagramm des bevorzugten Ausführungsbeispiels des in Fig. 5 dargestellten Verfahrens.

Die vorliegende Erfindung beschreibt die Abfolge von Aktionen, die ein System für einen VDP-Auftrag (Variable Data Print) durchführt, so dass dieser effizient produzierbar ist. Das bevorzugte Ausführungsbeispiel sieht eine VDP-Druckvorstufen-Workflow-Komponente vor, die dem Druckvorstufenoperator ein benutzerfreundliches Mittel zur Produktion von VDP-Aufträgen bereitstellt. Ein VDP-Auftrag kann aus Falldokumenten bestehen, die sich in Bezug auf die Art und Weise, in der sie produziert werden, erheblich voneinander unterscheiden. Beispielsweise können sich Falldokumente in Bezug auf Seitenzahl, Medienart, Anzahl der Seiten, die den bebilderbaren Bereich überschreiten, Seitenlayout (einseitig gegenüber beidseitig), Formatlage (Hochformat gegenüber Querformat), Metadaten, Anzahl der Exemplare und Weiterverarbeitung unterscheiden. Die VDP-Druckvorstufen-Workflow-Komponente verleiht dem Druckvorstufenoperator die Möglichkeit, den VDP-Auftrag zu analysieren und zu betrachten und den VDP-Auftrag innerhalb der digitalen Druckumgebung unter Nutzung von Kenntnissen der Geräte einzurichten, die in der Umgebung zur Verfügung stehen, so dass der VDP-Auftrag optimal produzierbar ist.

Das bevorzugte Ausführungsbeispiel der vorliegenden Erfindung stellt die VDP-Druckvorstufen-Workflow-Komponente als ein Acrobat® Plug-in bereit. Das Acrobat® Plug-in ist vorzugsweise in einer modularen Architektur angeordnet, die jedem der zahlreichen Module eine Eigenständigkeit ermöglicht, so dass jedes der Module schrittweise hinzugefügt oder gelöscht werden kann. Die VDP-Druckvorstufen-Workflow-Komponente unterstützt das PPML/VDX-Dateiformat und ermöglicht es dem Druckvorstufenoperator, einen VDP-Auftrag für die Produktion zu analysieren, einzusehen und aufzubereiten. Die Ausgabe der erfindungsgemäßen VDP-Druckvorstufen-Workflow-Komponente ist eine Vielzahl von produktionsreifen Aufträgen.

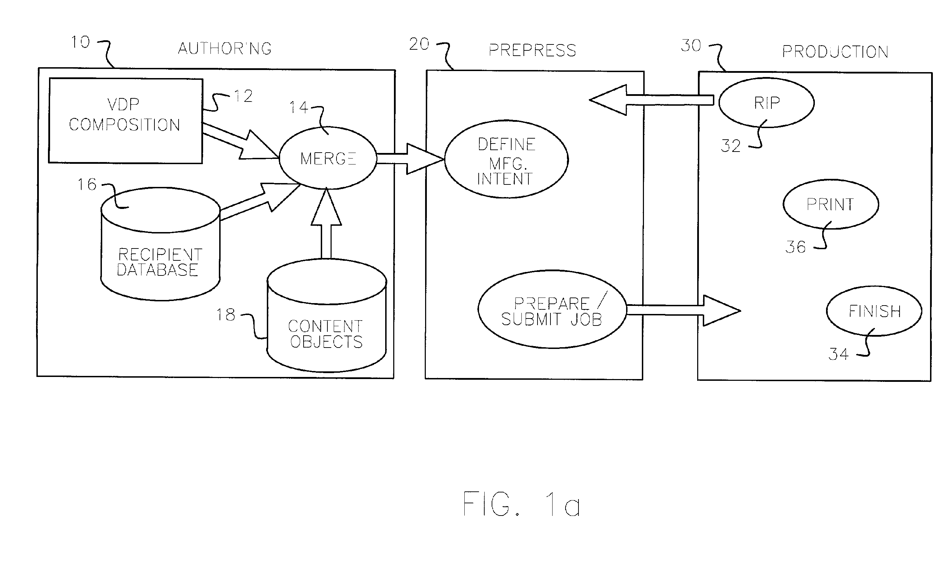

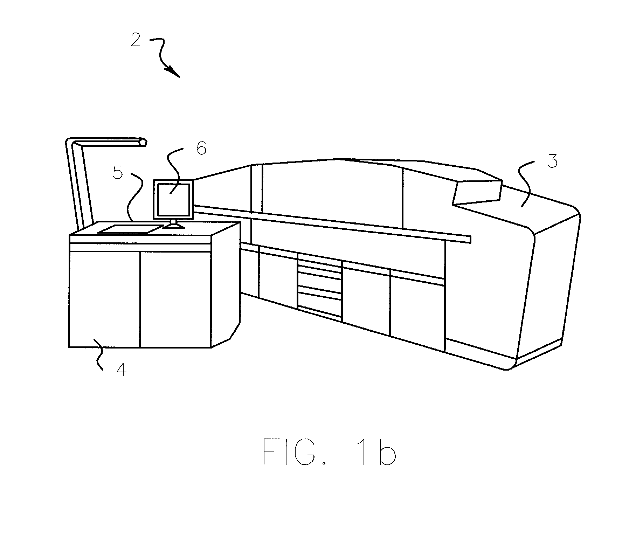

Fig. 1a zeigt, wie ein VDP-Auftrag erfindungsgemäß in drei Grundbereichen durchgeführt wird. Der Erstellungsbereich 10 stellt die PPML/VDX-Datei für die Druckvorstufe 20 bereit. Erfindungsgemäße Schritte im Bereich der Druckvorstufe 20 dienen zur Aufbereitung des VDP-Auftrags für die Produktion 30. Fig. 1b zeigt ein digitales Drucksystem 2 des Typs NexPress 2100™, das eine grafische Benutzeroberfläche 6 und eine NexStation™ 4 für die Eingabe mit einer Eingabevorrichtung 5 und die Steuerung des Druckers 3 umfasst.

Der Erstellungsbereich 10 wird typischerweise von dem Grafikdesigner wahrgenommen, der dem statischen Inhalt variablen Inhalt mithilfe eines Mittels in der VDP-Satzherstellung hinzufügt, um den traditionellen statischen Designs, die durch Anwendungen, wie Quark® und In Design® erzeugt werden, variable Inhalte hinzuzufügen. Innerhalb des PPML/VDX-Standards lassen sich Informationen, die als Produktzweckdaten bezeichnet werden, in die PPML/VDX-Auftragsdaten einbinden, womit Informationen, wie erforderliche Medienarten und Bindungsarten, beschrieben werden. Diese Produktverwendungselemente werden in Form eines Jobtickets codiert (wie PJTF oder JDF). Der Bezug auf jede dieser Produktzweckeigenschaften erfolgt aus den PPML-Daten, so dass die in den PPML-Daten definierten Falldokumentdefinitionen mit einer Produktzweckdefinition bereitgestellt werden. Auf diese Weise werden die Eigenschaften der fertigen Dokumente, wie Art der Bindung, Medientypen, Anzahl der Exemplare und Anzahl der Seiten, die den Bebilderungsbereich überschreiten, und die sämtlich zur Definition des fertigen Druckprodukts beitragen, für ein gegebenes Dokument explizit spezifiziert. Die vorliegende Erfindung nutzt NexTreme™ als Werkzeug für die VDP-Satzherstellung 12 innerhalb des Erstellungsbereichs 10. NexTreme™ ist eine proprietäres Erstellungsanwendung von NexPress Solutions, LLC, das das PPML/VDX-Dokument für die Druckvorstufe 20 erzeugt und zusätzliche Metadaten in Form von Erweiterungen der variablen PPML/VDX-Daten erzeugt, die von NexTreme™ hinzugefügt werden. Diese Erweiterungen können Einträge sein, die aus der Empfängerdatenbank entnommen sind, wie Alter des Empfängers, Geschlecht, postalische Anschrift oder andere variable Daten, die speziell dem Empfänger zugeordnet sind. Der Erstellungsbereich 10 speichert diese Erweiterungen als Metadaten in dem PPML/VDX-Auftrag ab. Die Druckvorstufen-Workflow-Anwendung greift später im Workflow auf die Produktzweckinformation zu, einschließlich der Metadaten, die in dem PPML/VDX-Auftrag gespeichert sind, wie von dem Grafikdesigner mithilfe von NexTreme™ angegeben, um die optimale Jobticketspezifikation zum Drucken des Auftrags zu bezeichnen.

Innerhalb des bevorzugten Ausführungsbeispiels stammen die variablen Daten aus Daten in der Empfängerdatenbank 16, die die Zielgruppe charakterisieren. Dahinter steht die Absicht, dass das in hohem Maße individuell gestaltete Druckmaterial, das aus dem Variable Data Printing (Drucken mit variablen Daten) stammt, der Druckindustrie den Erfolg verschafft, der heute im Internet mit 1:1-Marketing erlebt wird. Bei dem Zusammenführen oder Verknüpfen 14 handelt es sich um einen Prozess, in dem Daten aus der Empfängerdatenbank 16 mit statischen Dateninhalten verknüpft werden, die sich in Inhaltsobjekten 18 befinden, um das verknüpfte PPML/VDX-Falldokument zu erzeugen. Zum besseren Verständnis der Beschreibung des Verknüpfungsvorgangs 14 folgt eine kurze Erörterung der hierarchischen Struktur einer VDX-Datei.

Eine VDX-Datei bezeichnet im vorliegenden Zusammenhang den VDX-Teil einer PPML/VDX-Datei. Die PPML/VDX-Datei stellt hauptsächlich die Nutzung von PPML (einer Implementierung der XML-Technik) zur Beschreibung der Position von PDF-Objekten auf jeder Seite eines VDP-Auftrags dar, der aus einem oder mehreren Falldokumenten besteht. Wie zuvor beschrieben, ist eine Authoring-Anwendung erforderlich, um einen PPML/VDX-Auftrag zu schaffen. Das bevorzugte Ausführungsbeispiel nutzt NexTreme™ (eine proprietäre VDP-Erstellungsanwendung von NexPress Solutions, LLC), aber es sind auch andere VDP-Erstellungsanwendung zur Durchführung der Erfindung verwendbar. Der Grafikdesigner erzeugt in der VDP-Satzherstellung 12 eine Vorlage, die aus statischen Bildern, Grafiken und Texten sowie aus variablen Bildern, Grafiken und Texten besteht. Den variablen Bestandteilen des Layouts sind Sätze von Regeln zugeordnet, die die Prozeduren beschreiben, die notwendig sind, um jedes Falldokument zu erzeugen. Ein Druckauftrag kann beispielsweise ein grafisches Feld umfassen, das für ein Bild eines Automobils als Werbemaßnahme für jede Person vorgesehen ist, die in einer Empfängerdatenbank aufgeführt ist, wobei die Entscheidung, welche variablen Daten für das Automobil verwendet werden, in etwa folgendermaßen aussehen könnte:

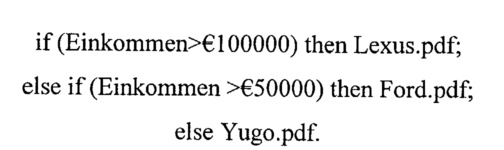

Die Datenbank mit den Inhaltsobjekten 18 muss daher folgende PDF-Dateien enthalten: Lexus.pdf, Ford.pdf und Yugo.pdf.

Sobald der VDP-Auftrag in einem PPML/VDX-Dateiformat erstellt worden ist, erzeugt der Verknüpfungsprozess 14 ein Falldokument für jeden Satz in der Empfängerdatenbank 16. Die Empfängerdatenbank 16 ist eine Datei, die eine Datenbank von Sätzen enthält, die sich auf Metadaten der Empfänger beziehen. Beispielsweise könnte die Empfängerdatenbank 16 wie in der folgenden Tabelle 1 aufgebaut sein.

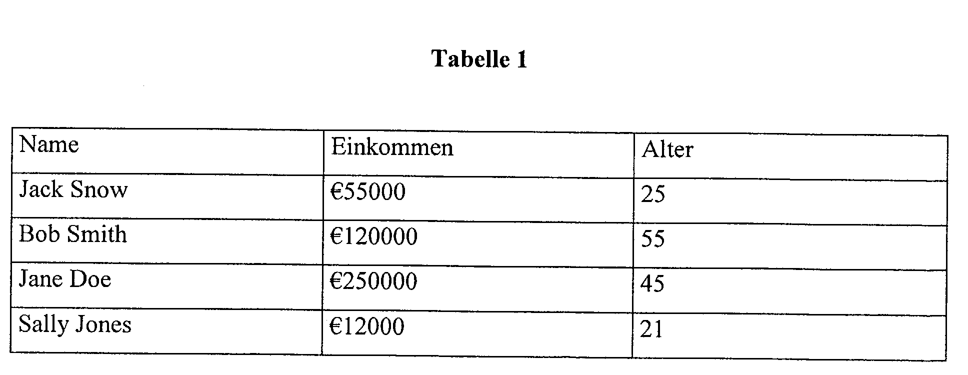

Während des Verknüpfungsprozesses greift die VDP-Erstellungsanwendung jeweils auf einen Satz aus der Empfängerdatenbank 16 zu und erzeugt ein einzelnes Falldokument unter Verwendung der Vorlage, die statische und variable Bilder, Grafiken und Text enthält. Der Verknüpfungsprozess 14 wendet die statischen Objekte auf jedes der Falldokumente unter Verwendung der Regeln an, die von dem Autor für die Einbeziehung variabler Objekte definiert worden sind. In dem vorausgehenden Beispiel erzeugt der Verknüpfungsprozess 14 ein Falldokument (eine VDX-Datei) für Jack Snow. Der Verknüpfungsprozess 14 fügt dann ein Bild zum Falldokument für Jack Snow hinzu und wendet die Regeln an, die von dem Autor während des Erstellungsprozesses erstellt worden sind, worauf das System auf die Empfängerdatenbank 16 und die Datei Ford.pdf zugreift. Der Verknüpfungsprozess 14 fügt dann die Datei Ford.pdf der VDX-Datei hinzu und erzeugt einen Eintrag im PPML-Bereich der Datei, der beschreibt, wo Ford.pdf auf einer bestimmten Seite für das Falldokument von Jack Snow anzuordnen ist. Das Ergebnis nach dem Verknüpfungsprozess 14 ist eine VDX-Datei mit einem PPML-Bereich, der ein Falldokument für jeden Satz in der Empfängerdatenbank 16 beschreibt, plus sämtliche Bild-, Grafik- und Textobjekte, die normalerweise aus einer Inhaltsdatenbank kommen.

Das bevorzugte Ausführungsbeispiel der vorliegenden Erfindung ist ein VDP-System, das eine skalierbare, durchgängige Lösung darstellt, die eine offene PDF-basierende Workflow-Architektur nutzt, die die Trennung von den VDP-Erstellungs- und den VDP-Druckproduktionsprozessen unterstützt. Die Trennung des VDP-Erstellungsprozesses von dem VDP-Druckproduktionsprozess hat die Erstellung von VDP-Druckvorstufen-Workflow-Komponenten als Instrument notwendig gemacht, das von dem Druckvorstufenoperator in der Druckvorstufe 20 genutzt werden kann, um den VDP-Druckauftrag optimal aufzusetzen, wie vom Produzenten des Auftrags beschrieben. Der VDP-Druckauftrag, der während des Druckvorstufenprozesses 20 von dem Druckvorstufenoperator empfangen wird, enthält ein oder Tausende von Falldokumenten, die keine Struktur aufweisen, was die Seiten pro Dokument, die Exemplare pro Dokument, Medien, Seiten, die den Bebilderungsbereich überschreiten sowie die Weiterverarbeitungsoptionen betrifft. Um die genaue und effiziente Herstellung des gesamten VDP-Auftrags zu ermöglichen, wie durch die PPML/VDX-Datei angegeben, stellt der Druckvorstufenprozess 20 Mittel zur Verfügung, um den VDP-Auftrag für den Produktionsprozess 30 zu analysieren, einzusehen und aufzubereiten. Während des Produktionsprozesses 30 wandelt der Rasterbildprozessor (RIP) 32 den Code für jedes Text- und Grafikelement auf jeder Seite in ein Format um, das von der Druckvorrichtung gedruckt werden kann. Nachdem der VDP-Auftrag gerastert worden ist, wird er gedruckt 36 und weiterverarbeitet 34.

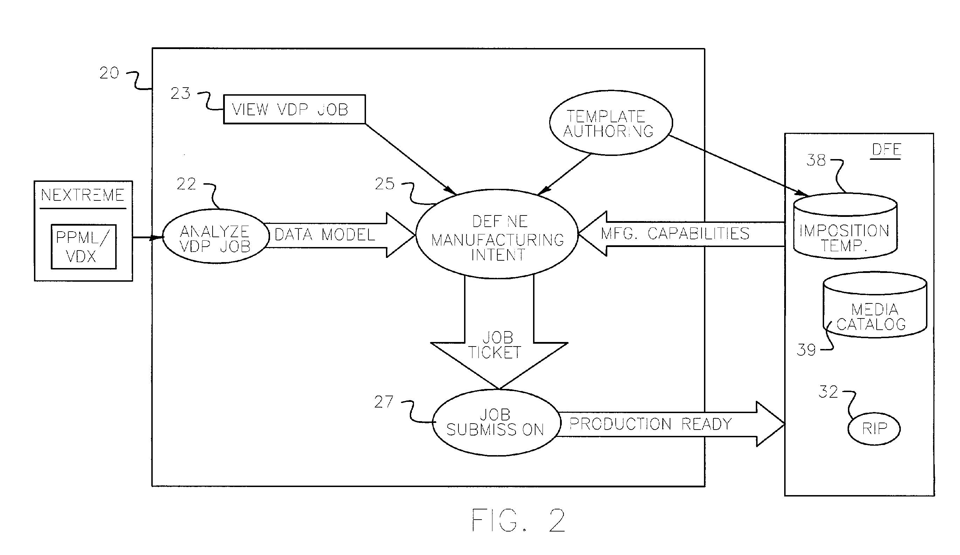

Fig. 2 zeigt ein Diagramm, das den von dem Druckvorstufenprozess 20 durchgeführten Workflow darstellt, nachdem dieser die PPML/VDX-Datei von dem Authoring-Prozess 10 übernommen hat. Der Druckvorstufenprozess 20 nimmt den VDP-Auftrag als Eingabe in Form einer PPML/VDX-Falldatei entgegen und erzeugt eine Ausgabe für den Produktionsprozess 30, bei dem es sich um einen druckfertigen VDP-Auftrag handelt.

Der VDP-Druckvorstufenprozess 20 ist vorzugsweise ein Acrobat® Plug-in und stellt eine Funktionalität mit dem typischen "Look and Feel" von Acrobat® Plug-ins bereit. Vorzugsweise ist der Druckvorstufenprozess 20 mit High-Level-Funktionen ausgestattet, die ihm die Möglichkeit verleihen, einen VDP-Auftrag einzusehen, zu analysieren, Produktionsparameter für einen VDP-Auftrag zu definieren, einen VDP-Auftrag zu erteilen, die Weiterverarbeitungsprüfung für einen VDP-Auftrag zu definieren und VDP-Aufträge durch Ableitung zu erstellen.

Wie ebenfalls in Fig. 2 gezeigt, ermöglicht das Verfahren "VDP-Auftrag einsehen" 23 dem Druckvorstufenoperator, die PPML/VDX-Datei in ihrer vorgesehenen Weiterverarbeitung einzusehen und eine PPML/VDX-Datei seitenweise so zu betrachten, wie sie der Kunde nach Druck und Weiterverarbeitung sehen würde. Der Druckvorstufenoperator öffnet die PPML/VDX-Datei in der Druckvorstufenumgebung, worauf die erste Seite des ersten Falldokuments angezeigt wird. Unter dem üblichen Acrobat® Lesezeichenregister ist die PPML/VDX-Datei nach Falldokumentgrenzen eingeteilt. Der Druckvorstufenoperator kann ein beliebiges Falldokumentlesezeichen auswählen und die erste Seite betrachten. Über die Funktion "VDP-Auftrag einsehen" 23 stehen dem Druckvorstufenoperator alle üblichen Acrobat® "Seite vor/Seite zurück"-Funktionen zur Betrachtung der PPML/VDX-Datei zur Verfügung. Die Funktion "VDP-Auftrag einsehen" 23 lässt sich ausführen, um eine PPML/VDX-Datei mit minimaler Leistungseinbuße im Vergleich zur Betrachtung reiner PDF-Dateien einzusehen.

Die PPML/VDX-Datei wird beim Öffnen geprüft, um festzustellen, ob sie "Valid" (gültig) oder "Well-Formed" (gut ausgebildet) ist. "Valid" und "Well-Formed" sind durch die Extensible Markup Language (XML) 1.0 spezifiziert und werden vom Druckvorstufenoperator angegeben. Innerhalb des bevorzugten Ausführungsbeispiels erkennt die VDP-Druckvorstufensoftware, dass sie eine VDP-Datei geöffnet hat und stellt die gesamte anwendbare VDP-Funktionalität zur Verfügung. Bei Öffnen der PPML/VDX-Datei wird zunächst die erste Seite des ersten Dokuments geöffnet. Der Druckvorstufenoperator betrachtet die weiteren Seiten durch Verwendung der üblichen Acrobat® Navigationswerkzeuge.

Das bevorzugte Ausführungsbeispiel der Erfindung benutzt Systemsoftware, um PPML/VDX-DateienalszusammengesetztePPML/VDX-Seitenzubetrachten (vorab ausgeschossene PPML/VDX-Seiten). In der Standardbetrachtungsebene der Systemsoftware werden alle PPML/VDX-Dateien als zusammengesetzte PPML/VDX-Dateien betrachtet. Die Systemsoftware unterstützt die übliche Acrobat® Navigation von Seiten in einer PPML/VDX-Datei, indem diese auf der Benutzeroberfläche mit eindeutigen, numerischen Bezeichnern für jedes Falldokument angezeigt werden. Der eindeutige Bezeichner entspricht der von oben ausgehenden Reihenfolge des Falldokuments in der PPML/VDX-Datei. Das erste Falldokument ist das Falldokument Nr. 1.

Das bevorzugte Ausführungsbeispiel ermöglicht die Betrachtung der PPML/VDX-Seiten in einer PPML/VDX-Datei im Vergleich zu PDF-Dateien mit geringfügigen oder gar keinen Leistungseinbußen, da eine PPML/VDX-Datei so wie eine reine PDF-Version des Inhalts betrachtet werden kann. Das bevorzugte Ausführungsbeispiel unterstützt zudem die üblichen Acrobat® Lesezeichen für die Bezeichnung von Falldokumenten innerhalb von Falldokumenten. Zudem unterstützt die Systemsoftware des bevorzugten Ausführungsbeispiels vorab ausgeschossene Ansichten der PPML/VDX-Dateien innerhalb der Netzumgebung der Anwendung. Die Systemsoftware unterstützt zudem vorab ausgeschossene und ausgeschossene Bogenansichten von PPML/VDX-Dateien innerhalb einer zugänglichen NexStation™ 4 Umgebung. Es sei darauf hingewiesen, dass dies die Unterstützung von Teilen der proprietären Schnittstelle zur NexStation™ 4 umfasst.

Das bevorzugte Ausführungsbeispiel ermöglicht das Betrachten einer bestimmten Seitenzahl eines Falldokuments derart, dass das folgende Navigieren über die Tasten "Seite vor/Seite zurück" dazu führt, dass zu der Seitenzahl des vorherigen/nächsten Falldokuments navigiert wird, soweit diese vorhanden ist.

Die Funktion "VDP-Auftrag einsehen" 23 führt eine Funktion durch, die das Betrachten der PPML/VDX-Datei in ihrer zu druckenden (weiterverarbeiteten) Form ermöglicht. Dadurch kann ein Druckvorstufenoperator Bogen einer PPML/VDX-Datei nacheinander so einsehen, wie diese Bogen nach dem Drucken aussehen würden. Sobald der Druckvorstufenoperator eine PPML/VDX-Datei mit der Druckvorstufenkomponente erfolgreich geöffnet hat, kann er über die grafische Benutzeroberfläche 6 die Option wählen, die Datei in ausgeschossener Form zu betrachten. Falls der PPML/VDX-Datei bereits ein Adobe Jobticket (PJTF oder JDF) zugeordnet ist, zeigt der Betrachter die Oberfläche des ausgeschossenen Bogens. Diese Ansicht umfasst das Seitenlayout, relevante Dokumentmarken (Beschnitt, Falzung, Beschnittzugabe, Strichcodes) und Anmerkungen. Das bevorzugte Ausführungsbeispiel liefert in dieser Ansicht keine Lesezeichen, weil es keine Regel gibt, die Falldokumente daran hindert, sich auf Bogenflächen zu überlagern. Der Druckvorstufenoperator kann alle üblichen Acrobat® Funktionen für "Seite vor/Seite zurück" verwenden, um die PPML/VDX-Datei einzusehen. Eine minimale Leistungseinbuße ist beim Betrachten einer PPML/VDX-Datei in der ausgeschossenen Ansicht zu erwarten, wenn man dies mit dem Betrachten einer PPML/VDX-Datei in der vorausgeschossenen Ansicht vergleicht.

Damit der Druckvorstufenoperator die Funktion "VDP-Auftrag einsehen" 23 ausführen kann, öffnet die Systemsoftware zunächst die PPML/VDX-Datei, und ein Adobe® Jobticket (PJTF oder JDF) wird der PPML/VDX-Datei zugeordnet, um das Ausschießlayout für den VDP-Druckauftrag zu beschreiben. Der Druckvorstufenoperator wählt eine Option über die grafische Benutzeroberfläche 6, die es ermöglicht, die PPML/VDX-Datei so einzusehen, wie sie in ausgeschossener Form gedruckt würde. Der Druckvorstufenoperator kann weitere Seiten mithilfe der üblichen Navigationsmittel von Acrobat® einsehen. Das bevorzugte Ausführungsbeispiel sieht vor, die PPML/VDX-Datei in einer ausgeschossenen Form zu betrachten, indem die Layoutparameter eines Adobe® Jobtickets (PJTF und JDF) unterstützt werden. Die Betrachtung einer Bogenoberfläche einer PPML/VDX-Datei, wie durch das zugehörige Adobe® Jobticket angegeben, erfolgt mit den entsprechenden Merkmalen, wie Seitenlayout, Dokumentmarken (Beschnitt, Falzung, Beschnittzugabe, Strichcodes) und Anmerkungen. Die Systemsoftware liefert ausgeschossene Ansichten der PPML/VDX-Dateien innerhalb der Netzumgebung der Anwendung. Ausgeschossene Ansichten der PPML/VDX-Dateien innerhalb einer zugänglichen NexStation™ 4 Umgebung werden ebenfalls unterstützt. Dementsprechend wird das bevorzugte Ausführungsbeispiel in einer Weise beschrieben, die sich speziell auf eine NexPress™ 2100 Umgebung bezieht, wobei allerdings Abwandlungen selbstverständlich möglich sind, die sich leicht auf andere Teile der Einrichtung übertragen lassen.

Die Funktion "VDP-Auftrag einsehen" 23 ermöglicht dem Druckvorstufenoperator, eine PPML/VDX-Datei mit jeweils einem PDF-Objekt nacheinander einzusehen. Um die Betrachtung eines einzelnen PDF-Objekts abzuschließen, stellt das System die PPML/VDX-Dateien als eine Folge frei zugänglicher PDF-Objekte bereit. Nachdem der Druckvorstufenoperator eine PPML/VDX-Datei erfolgreich mit der Software für den Druckvorstufenprozess 20 geöffnet hat, wird die Option zur Betrachtung der Datei als frei zugängliche Liste von PDF-Objekten gewählt. Die Betrachtung der PPML/VDX-Datei als Liste von PDF-Objekten kann bei der Fehlerbereinigung in der Darstellung des PPML/VDX-Inhalts hilfreich sein. In dieser Ansicht liegen keine Lesezeichen vor, da die Objekte in dieser Ansicht unabhängig von jeder Seite oder von jedem Falldokument sind. Der Druckvorstufenoperator kann sämtliche Acrobat® "Seite vor/Seite zurück"-Standardfunktionen nutzen, um die PPML/VDX-Datei zu betrachten.

Das Verfahren "VDP-Auftrag analysieren" 22 ermöglicht dem System, alle Falldokumente in dem VDP-Auftrag zu kennzeichnen, so wie sie vom Produzenten nach dem Erstellungsprozess 10 geliefert werden. Die Kennzeichnung durch das Verfahren "VDP-Auftrag analysieren" 22 liefert Informationen, die es dem Druckvorstufenoperator ermöglichen, den gesamten VDP-Auftrag genau und effizient herzustellen. Ein VDP-Auftrag in dem bevorzugten Ausführungsbeispiel kann aus einem oder mehr als 10.000 Falldokumenten bestehen. Die Falldokumente können sich voneinander beispielsweise durch Seitenzahl, Anzahl der Seiten, die den bebilderbaren Bereich überschreiten, Anzahl der Exemplare, Weiterverarbeitung, wie z.B. Klebebindung oder Rückstichheftung, einseitiges oder beidseitiges Kopf-an-Kopf-Layout oder beidseitiges Kopf- and Fuß-Layout sowie durch die Formatlage, wie Querformat oder Hochformat, unterscheiden. Falldokumente können Abwandlungen im Bereich der logischen Reihenfolge der erforderlichen Medien unterscheiden: A4, A4, A4; A4, A4, A4, A4; A4, A4, A3 und A3, A3, A3, A3, A3. Zudem können Metadaten in den Falldokumenten wechseln. Metadaten im Kontext eines VDP-Auftrags beziehen sich typischerweise auf Informationen, die aus der Empfängerdatenbank entnommen sind und einem Falldokument zugeordnet werden. Beispielsweise kann eine Datenbank ein Feld aufweisen, das die Postleitzahl jeder Person enthält, die eine Broschüre erhält. Die VDP-Erstellungsanwendung kann es dem Autor ermöglichen, den Wert jeder Postleitzahl des Empfängers dem resultierenden Falldokument im Element "Private-Info" einer PPML/VDX-Datei zuzuordnen. Diese Metadateninformation lässt sich später im Workflow als Variante einer VDP-Familie nutzen.

Jede Variante in den Falldokumenten ist wichtig, da Varianten die Art und Weise beeinflussen, in der das gedruckte Dokument produziert wird, was wiederum die Wahl einer Vorrichtung betreffen kann oder die Weise, in der eine bestimmte Vorrichtung benutzt wird und vor allem das Ausschießschema.

Die Funktion "VDP-Auftrag analysieren" 22 charakterisiert alle Falldokumente in einem Druckauftrag und platziert die charakterisierten Falldokumente in Gruppen, die hier als VDP-Familien bezeichnet werden. Eine VDP-Familie ist eine Gruppe von Falldokumenten mit identischen Werten für den Satz von Variantenparametern, die von dem Druckvorstufenoperator in einem VDP-Auftrag gewählt werden. Aus der Liste von VDP-Familien und deren entsprechenden Parametern kann der Druckvorstufenoperator ermitteln, wie der gesamte VDP-Auftrag herzustellen ist. Dank der Charakterisierung aus der Funktion "VDP-Auftrag analysieren" 22 ist der Druckvorstufenoperator in der Lage, die Herstellung jeder VDP-Familie individuell zu wählen oder einige oder alle VDP-Familien gemeinsam in vorbestimmter Weise herzustellen. Gruppierte VDP-Familien lassen sich in gleicher Weise herstellen, oder es lassen sich einige Mitglieder der Gruppen von VDP-Familien mit einer oder mehreren gleichen Herstellungsvarianten herstellen.

Damit der Druckvorstufenoperator während des Druckvorstufenprozesses 20 in dem VDP-Auftrag navigieren kann, muss die VDP-Auftragsfunktionalität analysiert werden. Dies erfolgt im bevorzugten Ausführungsbeispiel durch Wahl eines Registers für "VDP-Auftrag analysieren" 22, das dem "Look and Feel" in Acrobat® entspricht. Der Druckvorstufenoperator kann somit auswählen, welche VDP-Familienvarianten zu unterscheiden sind. Das könnte in der Bereitstellung entsprechender Auswahlfelder für jede der folgenden Varianten resultieren: Seitenzahl, Medienfolge, Seiten, die den bebilderbaren Bereich überschreiten, Kopienzahl, Layoutfolge, Ausrichtungsfolge, Meta-Daten und Weiterverarbeitung. Der Druckvorstufenoperator klickt auf eine Schaltfläche, die die VDP-Auftragsanalyse initiiert. Die Softwarekomponente für den VDP-Druckvorstufen-Workflow durchsucht den gesamten XML-Bereich der PPML/VDX-Datei und unterteilt die Falldokumente in VDP-Familien, die einen eigenen Parametersatz darstellen, wie anhand der von dem Druckvorstufenoperator gewählten Variantenliste spezifiziert. Der VDP-Druckvorstufenprozess 20 zeigt in einem deutlich formatierten Textfeld für jede Familie die Anzahl der enthaltenen Falldokumente an sowie den Parameterwert jeder Variante. Hierzu ein Beispiel:

### Familie 1 -

Enthält 935 Falldokumente
Seitenzahl = 6
Medienfolge = A4, A4, A4, A4, A4, A4
Überschreitet den bebilderbaren Bereich auf Seite = keine
Anzahl Exemplare = 1
Weiterverarbeitung = Binden
Layoutfolge = einseitig, beidseitig Kopf-an-Kopf, beidseitig Kopf-an-Kopf, beiseitig Kopf-an-Kopf, beidseitig Kopf-an-Kopf, einseitig
Formatlagefolge = Hochformat, Hochformat, Hochformat, Hochformat, Hochformat, Hochformat
Meta-Daten: Zip Code = 12345

### Familie 2 -

Enthält 60 Falldokumente
Seitenzahl = 7
Medienfolge = A4, A4, A4, A4, A4, A4, A4
Überschreitet den bebilderbaren Bereich auf Seite = keine
Anzahl Exemplare = 1
Weiterverarbeitung = Binden
Layoutfolge = einseitig, einseitig, beidseitig Kopf-an-Kopf, beidseitig Kopf-an-Kopf, beiseitig Kopf-an-Kopf, beidseitig Kopf-an-Kopf, einseitig
Formatlagefolge = Querformat, Hochformat, Hochformat, Hochformat, Hochformat, Hochformat, Hochformat
Meta-Daten: Zip Code = 55555

### Familie 3 -

Enthält 5 Falldokumente
Seitenzahl = 6
Medienfolge = A4, A4, A4, A4, A4, A4
Überschreitet den bebilderbaren Bereich auf Seiten = 1, 3, 6
Anzahl Exemplare = 1
Weiterverarbeitung = Binden
Layoutfolge = einseitig, beidseitig Kopf-an-Fuß, beidseitig Kopf-an-Fuß, beiseitig Kopf-an-Fuß, beidseitig Kopf-an-Fuß, einseitig
Formatlagefolge = Hochformat, Hochformat, Hochformat, Hochformat, Hochformat, Hochformat
Meta-Daten: Zip Code = 98765

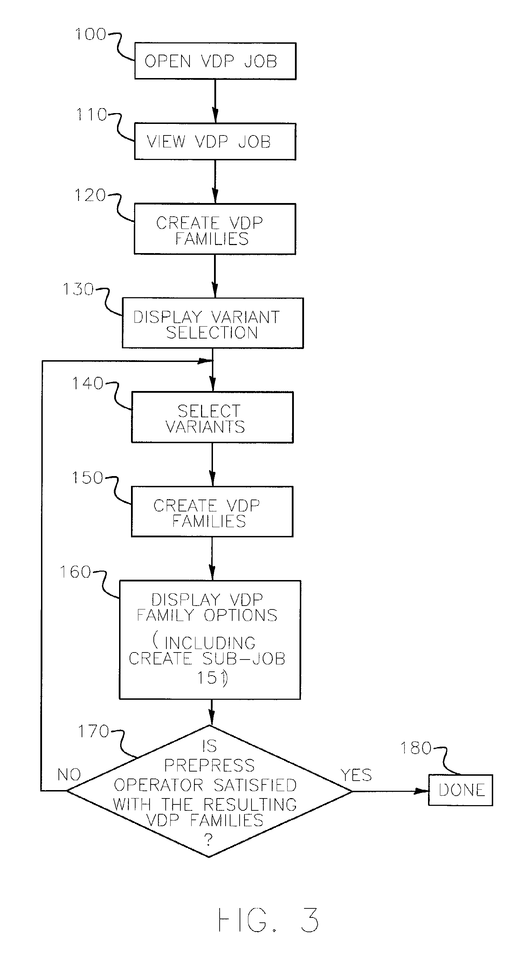

Fig. 3 zeigt ein Ablaufdiagramm des vom bevorzugten Ausführungsbeispiel der vorliegenden Erfindung verwendeten Verfahrens, das für die Charakterisierung aller Falldokumente sowie für deren Anordnung in als VDP-Familien bezeichneten Gruppen zuständig ist. Eine VDP-Familie ist eine Gruppe von Falldokumenten innerhalb eines VDP-Auftrags, die äquivalente Werte für den vom Druckvorstufenoperator gewählten Variantensatz enthält. Es sei darauf hingewiesen, dass ein äquivalenter Wert im Kontext der vorliegenden Erfindung entweder ein Einzelwert oder ein Bereich von Werten ist, dem jedes Falldokument in einer VDP-Familie entspricht. Anhand der Liste der VDP-Familien und deren entsprechenden Varianten sollte der Druckvorstufenoperator eindeutig ermitteln können, wie der gesamte VDP-Auftrag herzustellen ist. Dank der PPML/VDX-Analyse kann sich der Druckvorstufenoperator dazu entscheiden, jede Familie gesondert herzustellen oder einzelne oder alle Familien zu gruppieren und in gleicher Weise herzustellen.

Wie in Fig. 3 gezeigt, ist "VDP-Auftrag öffnen" 100 der Einstiegspunkt in ein Verfahren, in dem der Druckvorstufenoperator die VDP-Druckvorstufen-Workflow-Komponente öffnet, was im Falle der vorliegenden Erfindung das Öffnen eines VDP-Auftrags umfasst. "VDP-Auftrag einsehen" 110 ruft die Funktion "VDP-Auftrag einsehen" 23 auf, wie bereits zuvor besprochen, und ermöglicht dem Operator, die gesetzte Form des VDP-Auftrags einzusehen, wie sie in der Workflow-Anwendung vorliegt. Hierzu wird auf der grafischen Benutzeroberfläche 6 ein Anwendungsmenü aufgeschlagen, und der Druckvorstufenoperator veranlasst die Erstellung von VDP-Familien durch Wahl von "Erstellung von VDP-Familen beginnen" 120 aus dem Anwendungsmenü. Die Wahl von "Erstellung von VDP-Familen beginnen" 120 durch den Druckvorstufenoperator veranlasst die Aktivierung von "Variantenauswahl anzeigen" 130. "Variantenauswahl anzeigen" 130 ist eine von der grafischen Benutzeroberfläche 6 erzeugte Anzeige, die eine Vielzahl von Variantenparametern darstellt und dem Druckvorstufenoperator ermöglicht, Varianten mithilfe eines entsprechenden Werkzeugs auszuwählen, nach der Falldokumente in VDP-Familien sortiert werden. "Varianten auswählen" 140 ist der Prozess, durch den der Druckvorstufenoperator Varianten aus einer Kombination von Auswahlfeldern und Texteingabefeldern auswählt, die durch "Variantenauswahl anzeigen" 130 bereitgestellt werden. Die von dem Druckvorstufenoperator gewählten Varianten werden zur Erstellung von VDP-Familien verwendet. Beispiele für Varianten sind Seiten pro Falldokument, Anzahl gewünschter Exemplare, verwendete Medien, Weiterverarbeitung, Seiten, die den bebilderbaren Bereich überschreiten, Seitenlayout, Seitenausrichtung, Meta-Daten usw.

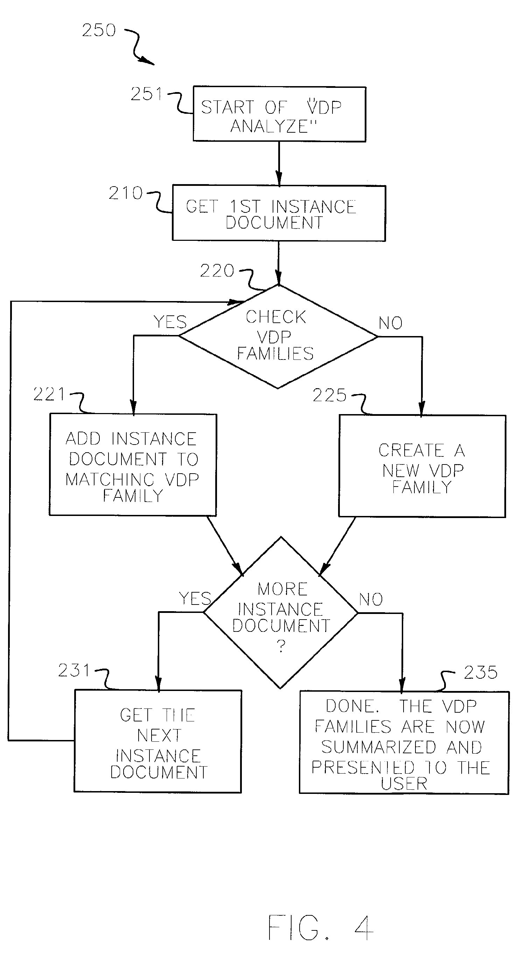

Der Druckvorstufenoperator wählt die zu verwendenden Varianten, während die Erstellung von VDP-Familien durch "VDP-Familien erstellen" 150 erfolgt (Fig. 4 zeigt ein detaillierteres und nachfolgend erläutertes Ablaufdiagramm von "VDP-Familien erstellen" 150). Sobald "VDP-Familien erstellen" 150 durchgeführt worden ist, liefert "VDP-Familienoptionen anzeigen" 160 dem Druckvorstufenoperator eine Liste von VDP-Familien, die aus den ausgewählten Varianten erzeugt worden ist, und zwar mit der Anzahl von Falldokumenten, die jeder Familie zugeordnet ist, sowie den entsprechenden Werten der Varianten. "Mit VDP-Familien einverstanden" 170 kann der Druckvorstufenoperator angeben, ob die Liste der VDP-Familien in dieser Weise erwünscht ist. Wenn der Druckvorstufenoperator nicht einverstanden ist, kann er dies über eine Eingabe auf der grafischen Benutzeroberfläche 6 kenntlich machen, worauf das Verfahren zu "Varianten auswählen" 140 zurückkehrt, um eine andere Parameterliste auswählen zu können. Sobald der Druckvorstufenoperator mit der Liste der VDP-Familien einverstanden ist, nimmt er einen entsprechenden Eintrag über die grafische Benutzeroberfläche 6 vor, worauf die Erstellung der VDP-Familien "abgeschlossen" 180 ist. Es sei darauf hingewiesen, dass VDP-Familien derart ausgewählt werden, dass der gesamte VDP-Auftrag in Gruppen von Falldokumenten unterteilt wird, die sich in gleicher Weise herstellen lassen, was insgesamt zu einer Verbesserung in Bezug auf die Zuverlässigkeit und Effizienz bei der Ausführung eines VDP-Auftrags führt.

"Unterauftrag erzeugen" 151 ist ein optionales Verfahren, das unter "VDP-Familienoptionen anzeigen" 160 bereitgestellt wird. "Unterauftrag erzeugen" 151 kann von dem Operator nach "VDP-Familien erstellen" 150 ausgeführt werden. "Unterauftrag erzeugen" 151 wird benutzt, wenn der Operator der Auffassung ist, dass der VDP-Auftrag für einen einzelnen Auftrag zu groß ist, oder aus anderen Gründen, die dafür sprechen, Aufträge zu erzeugen, die Untermengen des VDP-Auftrags sind. "Unterauftrag erzeugen" 151 wird später noch detaillierter erläutert.

Fig. 4 ist ein Ablaufdiagramm zur Darstellung des Verfahrens "VDP analysieren" 250, die zur Durchführung der Funktion "VDP-Auftrag analysieren" 22 benutzt wird und Falldokumente sortiert, um zu ermitteln, welcher VDP-Familie ein Falldokument zuzuordnen ist. Wie zuvor erwähnt, werden VDP-Familien durch eine Softwarekomponente erzeugt, die als "VDP-Familien erstellen" 150 bezeichnet ist und einen VDP-Auftrag entgegen nimmt, der viele einzelne Unterdokumente (Falldokumente) umfasst und diese in Gruppen äquivalenter Varianten, der so genannten VDP-Familien, sortiert. "VDP analysieren" 250 beginnt, nachdem der VDP-Auftrag in den Druckvorstufenprozess 20 eingetreten und die Erstellung des VDP-Auftrags in dem verwendeten Dateiformat erfolgt ist. Das bevorzugte Ausführungsbeispiel verwendet für das Erstellung des VDP-Auftrags ein PPML/VDX-Dateiformat. Dem Durchschnittfachmann auf diesem Gebiet ist bekannt, dass auch andere Dateiformate anstelle von PPML/VDX verwendbar sind. Bevor das in Fig. 4 dargestellte Verfahren "VDP-Familien erstellen" 150 ausgeführt werden kann, wird die VDP-Auftragsdatei geöffnet (im bevorzugten Ausführungsbeispiel eine VDX-Datei). Der Druckvorstufenoperator wählt dann die gewünschten Varianten aus, und das Sortierverfahren wird über die grafische Benutzeroberfläche 6 initiiert.

Die in der PPML/VDX-Datei enthaltene VDP-Auftragsbeschreibung hat für den VDP-Auftrag zahlreiche Varianten. Diese Varianten können folgendes umfassen: Seiteninhalt, Medientypen, Anzahl der Exemplare, Seiten, die den Bebilderungsbereich überschreiten und Weiterverarbeitung. Die Varianten werden von dem Druckvorstufenoperator angegeben und bewirken eine Gruppierung, die als Parameter verwendbar ist. Eine Gruppe von Falldokumenten in einem VDP-Auftrag mit äquivalenten Varianten lässt sich anhand von Varianten als Parametern sortieren, um die VDP-Familie zu suchen. Im bevorzugten Ausführungsbeispiel der Erfindung wird eine VDP-Familie im Allgemeinen anhand von ca. 5 Parametern ermittelt, wobei allerdings die Anzahl der Parameter schwanken kann und wobei die tatsächliche Anzahl von Parametern weniger als 5 oder sogar nur einen einzigen Parameter umfassen kann. Der Operator wählt die Liste von Parametern, die zur Sortierung von Falldokumenten in einer bestimmten VDP-Familie dient, durch Eingabe der gewünschten Varianten über die grafische Benutzeroberfläche 6. Es sind auch VDP-Familien mit einer vorbestimmten Liste von Parametern möglich, die die Eigenschaften einer VDP-Familie bestimmen. Ein Beispiel einer vorbestimmten VDP-Familie ist ein Sortierverfahren mit drei Varianten als Parameter, das die VDP-Familie charakterisieren, wie Anzahl der Seiten pro Dokument, Weiterverarbeitungsbedarf und Medien. Die Wahl der Parameter impliziert vorzugsweise, welche Varianten der Druckvorstufenoperator als relevant für die Herstellung des Druckauftrags erachtet. Vorzugsweise wird jedes Falldokument pro Sortiervorgang genau in einer VDP-Familie sortiert. Wenn ein anderer Sortiervorgang mit anderen Varianten durchgeführt wird, wird ein bestimmtes Falldokument einer anderen VDP-Familie gemäß dieser Sortieroperation zugeordnet. Es sei darauf hingewiesen, dass zwar die Zuordnung jedes Falldokuments zu nur einer einzigen Familie der bevorzugte Weg zur Ausführung der Erfindung ist, dass aber andere Gruppierungen ebenfalls möglich sind, worin ein Falldokument mehreren Familien gleichzeitig zugeordnet ist, wie es dem Durchschnittsfachmann auf diesem Gebiet unmittelbar klar ist..

Das Verfahren "VDP analysieren" 250 beginnt mit dem Verfahrensschritt "VDP-Analyse starten" 251 mit einem VDP-Auftrag, wie in der PPML/VDX-Datei definiert, sowie einer Variantenliste, die von dem Operator zur Erzeugung von VDP-Familien bereitgestellt wird. Danach beginnt der Verfahrensschritt "1. Falldokument holen" 210 mit einem leeren Satz von VDP-Familien und empfängt das erste Falldokument in dem VDP-Auftrag. Dieses erste Falldokument wird dann untersucht, um zu ermitteln, ob eine vorhandene VDP-Familie einen passenden Satz von Varianten aufweist.

In dem Verfahrensschritt "VDP-Familien überprüfen" 220 werden die von dem Druckvorstufenoperator gewählten Varianten mit den Varianten verglichen, die in der PPML/VDX-Datei für das erste Falldokument aufgelistet sind, um zu ermitteln, ob ein VDP-Familie vorhanden ist, deren Parameter mit den im aktuellen Falldokument aufgeführten äquivalent ist. Die vom Druckvorstufenoperator wählbaren Varianten umfassen: Seitenzahl, Medientypen, Kopienzahl, Seiten, die den bebilderbaren Bereich überschreiten, Weiterverarbeitung, Seitenlayout, Seitenausrichtung, Meta-Daten und andere mögliche Varianten. Die Liste der möglichen Varianten ist keine geschlossene Liste; die vorliegende Erfindung sieht zudem vor, dass auch andere Varianten verwendbar sind. Im Verfahrensschritt "VDP-Familien überprüfen" 220 wird geprüft, ob die gewählten Varianten in diesem Falldokument vorhanden sind, und ob eine Übereinstimmung für eine VDP-Familie vorliegt, die bereits für diesen VDP-Auftrag erstellt worden ist. Wenn in dem Falldokument Varianten vorhanden sind, die sich nicht in der von dem Druckvorstufenoperator angegebenen Parametergruppe befinden, wird der Verfahrensschritt "Neue VDP-Familie erzeugen" 225 ausgeführt, wodurch ein neues Element erzeugt wird, das eine Übereinstimmung mit dem vorliegenden Falldokument aufweist. "Neue VDP-Familie erzeugen" 225 erzeugt ein neues Element der VDP-Familie mit Parameterwerten, die mit dem aktuellen Falldokument übereinstimmen, und fügt das aktuelle Falldokument zum neuen VDP-Familienmitglied hinzu. Wenn die von dem Druckvorstufenoperator angegebenen Varianten in dem Falldokument gefunden werden, wird das Falldokument innerhalb des Verfahrensschritts "Falldokument zur VDP-Familie hinzufügen" 221 der passenden VDP-Familie zugeordnet, worauf das aktuelle Falldokument zur der VDP-Familie hinzugefügt wird, die äquivalente Parameterwerte aufweist, wie vom Benutzer ausgewählt.

In dem Verfahrensschritt "Weitere Falldokumente" 230 wird die Liste der Falldokumente untersucht, um zu ermitteln, ob weitere Falldokumente in dem VDP-Auftrag enthalten sind. Falls weitere Falldokumente innerhalb des Verfahrensschrittes "VDP analysieren" 250 sortiert werden müssen, wird in dem Verfahrensschritt "Nächstes Falldokument holen" 231 das nächste Falldokument geholt und wonach zu dem Verfahrensschritt "VDP-Familien überprüfen" 220 zurückgekehrt wird, um die Varianten zu vergleichen, die in der PPML-Datei für dieses nächste Falldokument aufgeführt sind, und eine VDP-Familie zu suchen, die mit den aufgelisteten Varianten übereinstimmt. Die zuvor für "VDP-Familien überprüfen" 220 besprochenen Schritte werden dann wiederholt. Die Liste der Falldokumente wird sortiert, bis eine falsche Antwort auf "Weitere Falldokumente" 230 eine Rückkehr zum aufrufenden Verfahrensschritt bewirkt und der Sortiervorgang abgeschlossen ist.

Sobald das Verfahren "VDP analysieren" das Sortierverfahren abschließt, wird in dem Verfahrensschritt "abgeschlossen" 235 eine Zusammenfassung der VDP-Familien für den Druckvorstufenoperator erzeugt, die es dem Druckvorstufenoperator ermöglicht, den gesamten VDP-Auftrag zu verstehen und genau und effizient zu verarbeiten. Die Analyse bewirkt ein Einsortieren jedes Falldokuments in eine VDP-Familie und eine Beschreibung der Charakteristik jeder VDP-Familie, damit der Druckvorstufenoperator den NexStation™ Drucker anweisen kann, den Auftrag in der gewünschten Weise herzustellen. Die Anweisungen an die NexStation™ 4 zum Drucken jeder VDP-Familie sind in einer als Jobticket bezeichneten Datenstruktur enthalten. Das Jobticket hat vorzugsweise das Format PJTF (Portable Job Ticket Format), bei dem es sich um ein Standarddateiformat handelt, das von dem Adobe® Jobticket erzeugt wird und branchenweit verbreitet ist. Zwar verwendet das bevorzugte Ausführungsbeispiel der vorliegenden Erfindung das PJTF-Format, aber es ist vorgesehen, das zukünftige Ausführungsbeispiele auch ein anderes Format unterstützen, das als JDF (Job Definition Format) bekannt ist. Nachdem das Ergebnis der VDP-Analyse verfügbar ist und die VDP-Familien identifiziert sind, wählt/erzeugt der Druckvorstufenoperator ein Jobticket, um den Auftrag zu drucken. Das Jobticket wird in einem Standarddateiformat geschrieben, das mit Software auf der NexStation™ 4 kompatibel ist. Die NexStation™ 4 versteht daher die Informationen in der Auftragsdatei, also welche Medien zu verwenden sind, wie die Bogen auszuschießen sind, ob die Bogen einseitig oder beidseitig sind oder wie die Weiterverarbeitung vorzunehmen ist. Sobald ein Jobticket erzeugt worden ist, kann es der PPML-Datei hinzugefügt und zur Ausführung an die NexStation™ 4 übergeben werden. Anhand der Analyseergebnisse weiß der Druckvorstufenoperator auf Anhieb, wie jede Familie aussieht und wie viele Falldokumente sich in jeder VDP-Familie befinden, so dass er ein Jobticket erzeugen kann, das für jede VDP-Familie ideal geeignet ist. Das jeder VDP-Familie zugeordnete Jobticket teilt der NexStation™ 4 dann mit, welche Medientypen für jeden Bogen zu verwenden sind, wie die Seiten auf den Bogen auszuschießen sind, wie viele Exemplare anzufertigen sind, wie die Weiterverarbeitung vorzunehmen ist, usw.

Der Druckvorstufenprozess 20 stellt eine übliche Acrobat® Benutzeroberfläche zur Verfügung, um die Funktion "VDP-Auftrag analysieren" 22 für eine PPML/VDX-Datei zu starten. Die Acrobat® Standardbenutzeroberfläche unterstützt die Spezifikation praktisch jeder Kombination von Varianten (auch Platzhalter), die die Funktion "VDP-Auftrag analysieren" 22 als Kriterien zur Erzeugung von VDP-Familien nutzt (d.h. eine Spalte von Varianten, die jeweils ein entsprechendes Auswahlfeld aufweisen. Eine Variantenliste besteht beispielsweise aus Seitenzahl, Medientypen, Exemplare, Anzahl der Seiten, die den Bebilderungsbereich überschreiten, Weiterverarbeitung sowie allen Varianten, die explizit durch "PRIVATE_INFO" in der PPML/VDX-Datei angegeben werden. Der Druckvorstufenprozess 20 lässt die Eingabe einer gültigen Hierarchie von PPML/VDX-Tags und -Attributen als Variante zu (etwa zur Differenzierung von Auftragsfamilien nach Postleitzahl in PRIVATE_INFO:

<PRIVATE_INFO><Zip_Code>12345</Zip_Code></PRIVATE_INFO>). Die Ergebnisse der Funktion "VDP-Auftrag analysieren" 22 werden auf der grafischen Benutzeroberfläche 6 in Form eines klar formatierten Textfeldes dargestellt, wobei für jede Familie die Anzahl der enthaltenen Falldokumente und die Parameterwerte jeder Variante angezeigt werden.

Nach Öffnen einer PPML/VDX-Datei und Ausführen des Verfahrensschritts "VDP-Familien erstellen" 150, wie in Fig. 3 gezeigt, stehen dem Druckvorstufenoperator mehrere Möglichkeiten zur Wahl, die durch den Verfahrensschritt "VDP-Familienoptionen anzeigen" 160 angezeigt werden. Eine dieser Möglichkeiten ist "Unterauftrag erzeugen" 151. Werkzeuge zur Auswahl eines Satzes von Falldokumenten werden durch die Druckvorstufen-Workflow-Softwarekomponente bereitgestellt. Nach Abschluss der Auswahl der Falldokumentmenge für den neuen Auftrag wird der neue Auftrag als vollständige PPML/VDX-Datei gespeichert.

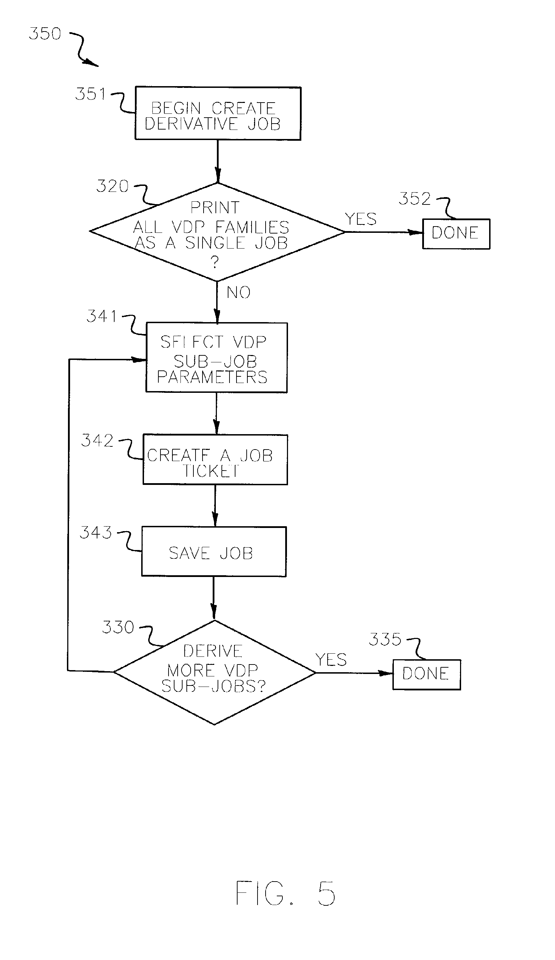

Fig. 5 zeigt ein Ablaufdiagramm für das Verfahren "Abgeleiteten Auftrag erstellen" 350, das durch das in Fig. 3 gezeigte Verfahren "Unterauftrag erzeugen" 151 auswählbar ist. Das Verfahren zum Erzeugen abgeleiteter Aufträge wird vorzugsweise nach dem in Fig. 3 gezeigten Ablauf ausgeführt, wie nachfolgend beschrieben wird. Fig. 5 zeigt das Verfahren zum Erzeugen abgeleiteter Aufträge, so wie es aus dem Ablaufdiagramm in Fig. 3 aufrufbar ist, wobei das Verfahren "Abgeleiteten Auftrag erstellen" 350 auch vor oder anstatt des Verfahrens "VDP analysieren" 250 oder parallel zum Verfahren "VDP analysieren" 250 ausführbar ist, wie in Fig. 5 gezeigt. Das Verfahren "Abgeleiteten Auftrag erstellen" 350 ermöglicht es dem Operator, mehrere kleinere Druckaufträge aus einem großen Druckauftrag zu erzeugen. Die Erfindung sieht die Fähigkeit vor, neue VDP-Aufträge als Untermenge eines größeren VDP-Auftrags in den Fällen zu erzeugen, in denen es der Operator als wünschenswert erachtet, einen Druckauftrag als eine Gruppe getrennter, kleinerer VDP-Aufträge zu erzeugen. Kleinere VDP-Aufträge sind in einer Reihe von Fällen wünschenswert, wie beispielsweise beim Prüfen von Druckläufen vor Beginn einer größeren Auflage oder zur Reduzierung eines großen Druckauftrags in Form kleinerer Druckaufträge. Die Erfindung sieht ein Instrument vor, um eine Untermenge von Falldokumenten aus einem größeren VDP-Auftrag zu extrahieren und einen neuen VDP-Unterauftrag zu erzeugen.

Das Verfahren "Abgeleiteten Auftrag erstellen" 350 wird durch operatorseitige Wahl der Option "Unterauftrag erzeugen" 151 während oder nach Erstellung von VDP-Familien ausgeführt, wie zuvor angegeben. Im bevorzugten Ausführungsbeispiel fasst das Verfahren "Start zum Erstellen eines abgeleiteten Auftrags" 351 VDP-Familien zusammen, die von dem Verfahren "VDP analysieren" 250 ermittelt worden sind, und stellt die VDP-Familien dem Druckvorstufenoperator über die grafische Benutzeroberfläche 6 zur Verfügung. Wenn der Druckvorstufenoperator das Verfahren "Unterauftrag erzeugen" 151 nicht auswählt, ermittelt das System sofort, dass das Verfahren "Alle VDP-Familien als Einzelauftrag drucken" 340 gewünscht wird, wodurch das Verfahren "Abgeleiteten Auftrag erstellen" 350 als "Abgeschlossen" 352 gilt. Falls der Druckvorstufenoperator das Verfahren "Unterauftrag erzeugen" 151 wählt, stellt das Verfahren "VDP-Unterauftragsparameter wählen" 341 dem Druckvorstufenoperator eine Auswahl auf der grafischen Benutzeroberfläche 6 bereit, die Falldokumente und VDP-Familien umfasst. Der Druckvorstufenoperator kann aus dem VDP-Elternauftrag Falldokumente oder Bereiche von Dokumenten als Parameter für den abgeleiteten VDP-Unterauftrag auswählen. Der Druckvorstufenoperator kann zudem ganze VDP-Familien als Parameter für den abgeleiteten VDP-Unterauftrag verwenden. Bei Auswahl der Parameter zur Erzeugung des abgeleiteten VDP-Unterauftrags erzeugt das Verfahren "Jobticket erzeugen" 342 eine Herstellungsspezifikation für den abgeleiteten VDP-Auftrag. Das Verfahren "Auftrag speichern" 343 speichert dann den abgeleiteten VDP-Unterauftrag. Der Druckvorstufenoperator erhält eine Abfrage durch das Verfahren "Weitere VDP-Unteraufträge ableiten" 330, die bei positiver Beantwortung durch den Druckvorstufenoperator das Verfahren "VDP-Unterauftragsparameter wählen" 341 erneut anstößt. Wenn der Druckvorstufenoperator keine weiteren VDP-Unteraufträge ableiten möchte, kehrt das Verfahren "Abgeschlossen" 335 zum Hauptverfahren für die VDP-Familie zurück.

Eine potenzielle Verwendung des Verfahrens "Abgeleiteten Auftrag erstellen" 350 besteht in der Durchführung einer Proof-Auftragsfunktion. Der Druckvorstufenoperator könnte eine Proof-Auftragsfunktion ausführen wollen, um die Druckergebnisse vor Durchführung eines großen Druckauftrags zu betrachten. Eine Proof-Auftragsfunktion wird durch Aufrufen des Verfahrens "Abgeleiteten Auftrag erstellen" 350 veranlasst, die es dem Druckvorstufenoperator ermöglicht, Parameter zum Betrachten und Drucken eines bestimmten Dokuments zu wählen. Der Druckvorstufenoperator wählt die Proof-Auftragsfunktion durch systematische Auswahl von Falldokumenten in dem Verfahren "VDP-Unterauftragsparameter wählen" 341, die ein Proof bestimmter, ausgewählter Dokumente (oder Dokumentsätze) erzeugt. Das System erzeugt dann ein Jobticket und bettet dieses ein, wobei das Jobticket alle ausgewählten Parameter sowie die gewählte Druckvorrichtung enthält, so dass der gesamte Auftrag zu einem späteren Zeitpunkt mit denselben Parametern gedruckt werden kann. Der Proof-Auftrag wird anschließend gedruckt.

Um das Verfahren "Abgeleiteten Auftrag erstellen" 350 auszuführen, stellt die grafische Benutzeroberfläche 6 eine Auswahl zur Frage "Unterauftrag erzeugen" 151 an einem der zuvor besprochenen Punkte bereit. Alternativ hierzu lassen sich Unteraufträge an mehreren Stellen darstellen. Nach Aufrufen des Verfahrens werden von dem Verfahren "Abgeleiteten Auftrag erstellen" 350 sämtliche Falldokumente aus einer Liste in einer neuen PPML/VDX-Datei zusammen mit allen bezogenen PDF-Inhalten gesammelt. Die Software läuft als ein Acrobat® Plug-In und unterstützt alle typischen Acrobat® Dateioperationen (öffnen, schließen, speichern, speichern unter) für *.vdx-Dateien. Das bevorzugte Ausführungsbeispiel sieht die Erkennung der gesamten VDX-Semantik in einer *.vdx-Datei vor.

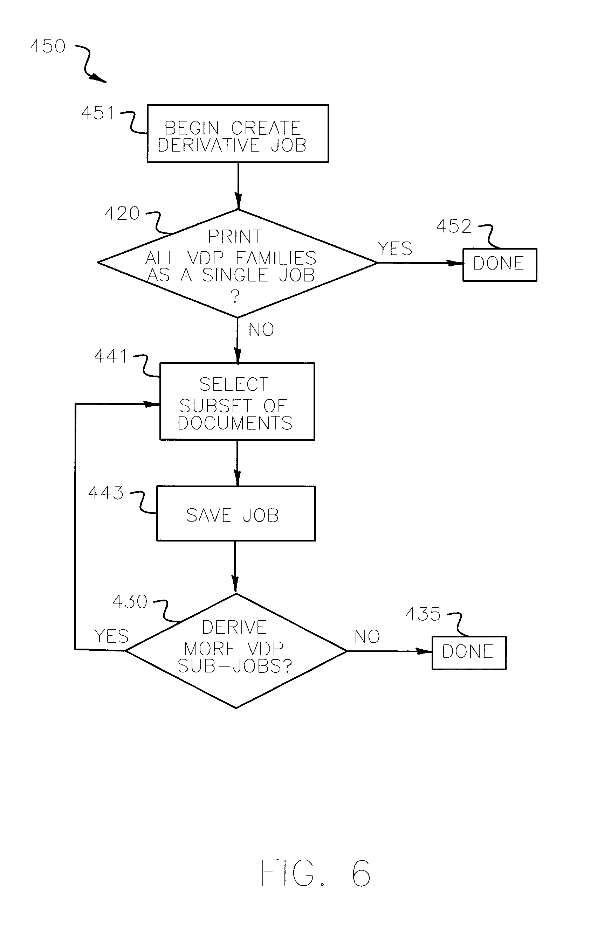

Fig. 6 zeigt ein Ablaufdiagramm für das Verfahren "Abgeleiteten Auftrag erstellen" 450, die durch Wahl des Verfahrens "Unterauftrag erzeugen" 151 ausgeführt wird, nachdem das Ablaufdiagramm aus Fig. 3 abgeschlossen worden ist. Der Hauptunterschied zwischen Fig. 6 und Fig. 5 besteht darin, dass Fig. 5 das Verfahren zum Erzeugen abgeleiteter Aufträge darstellt, die aus dem Ablaufdiagramm nach Fig. 3 aufgerufen wird, während Fig. 6 das bevorzugte Ausführungsbeispiel zum Erzeugen abgeleiteter Aufträge darstellt, nachdem die VDP-Familien erzeugt worden sind. In den Verfahrensschritten in Fig. 6 werden im Wesentlichen dieselbe Funktionen wie in den äquivalenten Verfahrensschritten aus Fig. 5 ausgeführt. Das Verfahren "Abgeleiteten Auftrag erstellen" 450 ermöglicht es dem Druckvorstufenoperator, mehrere kleinere Druckaufträge aus größeren Druckaufträgen zu erzeugen.

Das Verfahren "Abgeleiteten Auftrag erstellen" 450 wird ausgeführt, indem der Druckvorstufenoperator das Verfahren "Unterauftrag erzeugen" 151 nach Erzeugen von VDP-Familien startet. Das Verfahren "Start zum Erstellen eines abgeleiteten Auftrags" 451 fasst die VDP-Familien zusammen, die von dem Verfahren "VDP analysieren" 250 ermittelt worden sind, und stellt dem Druckvorstufenoperator die VDP-Familien über die grafische Benutzeroberfläche 6 dar. Wenn der Druckvorstufenoperator das Verfahren "Unterauftrag erzeugen" 151 nicht wählt, ermittelt das System sofort, dass das Verfahren "Alle VDP-Familien als Einzelauftrag drucken?" 440 positiv beantwortet worden ist, wodurch das Verfahren "Abgeleiteten Auftrag erstellen" 450 als "Abgeschlossen" 452 gilt. Wenn der Druckvorstufenoperator das Verfahren "Unterauftrag erzeugen" 151 wählt, dann stellt das Verfahren "VDP-Unterauftragsparameter wählen" 441 dem Druckvorstufenoperator entsprechende Auswahlmöglichkeiten auf der grafischen Benutzeroberfläche 6 bereit, die Falldokumente und VDP-Familien umfassen. Der Druckvorstufenoperator kann Falldokumente oder Bereiche von Dokumenten aus dem VDP-Stammauftrag in Form von Parametern für den abgeleiteten VDP-Unterauftrag auswählen. Der Druckvorstufenoperator kann auswählen, dass die gesamten VDP-Familien Parameter für den abgeleiteten VDP-Unterauftrag verwenden. Im Unterschied zu dem in Fig. 5 dargestellten Ablaufdiagramm führt die Wahl der zum Erzeugen des abgeleiteten VDP-Unterauftrags verwendeten Parameter nicht zur Erstellung von Jobtickets. Es werden von dem in Fig. 6 gezeigten Verfahren keine Jobtickets erstellt, weil der abgeleitete Auftrag von sich aus dasselbe Jobticket wie die VDP-Elternfamilie verwendet, von der der Unterauftrag erstellt worden ist. Das Verfahren "Auftrag speichern" 443 speichert den abgeleiteten VDP-Unterauftrag. Der Druckvorstufenoperator wird dann über das Verfahren "Weitere VDP-Unteraufträge ableiten" 430 abgefragt, worauf die Operation im Falle einer positiver Antwort durch den Druckvorstufenoperator zur Routine "VDP-Unterauftragsparameter wählen" 441 fortfährt. Wenn die Antwort des Druckvorstufenoperators auf die Abfrage "Weitere VDP-Unteraufträge ableiten" 430 negativ ist, kehrt das Verfahren über "Abgeschlossen" 435 zum Hauptverfahren für die VDP-Familien zurück.

Die vorliegende Erfindung sieht die Möglichkeit vor, einen neuen VDP-Auftrag als eine Untermenge eines größeren VDP-Auftrags zu erzeugen. Es ist bisweilen wünschenswert, einen VDP-Auftrag als Gruppe getrennter, kleinerer VDP-Aufträge zu verarbeiten. Zudem kann es wünschenswert sein, einen neuen VDP-Auftrag zu verarbeiten, der eine Untermenge eines größeren VDP-Auftrags ist. In jedem Fall sind Produktionsvorteile in Bezug auf die Kosten erzielbar, die durch das Zusammentragen, Organisieren und Anordnen der gedruckten Dokumente entstehen. Die Anordnung der gedruckten Dokumente kann auf beliebigen, zahlreichen Merkmalen beruhen. Eine effiziente Anordnung der fertigen Produkte lässt sich durch Kenntnis der Art der Medien, des Formats der Medien und durch Beseitigen eines Großteils des Aufwands erzielen, der durch das Zusammentragen der fertig gedruckten Dokumente entsteht.

Ein VDP-Auftrag kann aus 1 oder mehr als 10.000 Falldokumenten bestehen, die sich voneinander durch wenigstens eines der folgenden Attribute unterscheiden können:
Seitenzahl, logische Folge der Medien, Bindung, Weiterverarbeitung, Falzung, Art der Auslieferung des Druckprodukts (günstigste Postsortierung, inkl. Sortierung nach Postleitzahl und/oder Fertiggewicht), Anforderungen an die Druckmedien (Papiergewicht, Oberflächenbeschaffenheit, Helligkeit, Marke), Seitenformat (fertige Größe, Größe des Ausschießbogens), Seitenausrichtung oder Anforderungen an den Randschnitt.

Es gibt zahlreiche Varianten von Dokumenten und sogar Untermengen von Dokumenten, die zur Kategorisierung von Produktionsaufträgen für Dokumente mit variablen Daten verwendbar sind. Beispielsweise lassen sich verschiedene Untermengen von Dokumenten oder Unterdokumenten in Bezug auf gemeinsame Attribute auswählen, die aus einer beliebigen Kombination von gemeinsamen Attributen entnommen sind.

### Beispiel 1:

Angenommen, 100.000 Produkte mit variablen Druckdaten müssen hergestellt werden, wobei die Zahl der gedruckten Seiten der zahlreichen Druckprodukte zwischen 4 und 16 Seiten variiert. Man kann davon ausgehen, dass sich das Gewicht der verschiedenen fertigen Drucksachen proportional zur Seitenzahl jeder Drucksache verändert. Als Teil einer Optimierung von Postmassensendungen ist es üblich, Postversandsachen nach ihrem Gewicht in verschiedenen Fächern zu sortieren. Unter der Voraussetzung, dass sich die Seitenanzahl eines fertigen Dokuments proportional zum Fertiggewicht einer Drucksache verhält, können die Daten dazu herangezogen werden, das Gewicht einer fertigen Drucksache zu schätzen und diese vor der tatsächlichen Produktion zu sortieren, anstatt sie nach Fertigstellung mechanisch in Fächern sortieren zu müssen. Die Verwendung der Zahl der Seiten eines Dokuments als Variante zur Bestimmung von Untergruppen hat daher unbestrittene Vorteile.

### Beispiel 2:

Angenommen, ein Auftrag definiert Produkte mit variablen Druckdaten, die sowohl wechselnde Inhalte als auch wechselnde Anforderungen an die Bindung aufweisen. Einige Bindungen sollen in Rückstich- oder Sattelheftung ausgeführt werden, andere mit Klebebindung. Um dieses Beispiel relativ einfach zu halten, sei weiterhin angenommen, dass sämtliche Dokumente genau acht fertige Seiten umfassen, die beidseitig Kopf-an-Kopf gedruckt werden, und dass keine der Seiten, die mit Klebebindung auszuführen sind, sich bis über den Seitenrand erstreckende Bedruckung (full bleed center fold) aufweisen (was sonst bedeuten würde, dass die jeweiligen Seiten auf größere Formate ausgeschossen und anschließend beschnitten werden müssten, wodurch sich die gesamten Fertigungskosten erhöhen würden), und dass die mit Rückstichheftung zu versehenen fertigen Dokumente einen Mittelbogen mit sich bis über den Seitenrand erstreckender Bedruckung (full bleed center fold) aufweisen (was einen Beschnitt erfordert). Zudem sei angenommen, dass die zu verwendende Druckvorrichtung im A4-Format (oder im C3-Format (324 x 458 mm / 12 x 18 Zoll)) drucken kann. Um den Auftrag bestmöglich zu produzieren, werden die Eigenschaften vom Druckvorstufenoperator analysiert. Der Druckvorstufenoperator kann sich entscheiden, alle fertigen Drucksachen für die Klebebindung in einem ersten Durchgang zu drucken und die mit Rückstichheftung zu versehenen Drucksachen in einem zweiten Durchlauf. Ferner sei angenommen, dass der Druckvorstufenoperator die Entscheidung, diese beiden Durchläufe herzustellen, trifft, weil der Durchlauf für die Klebebindung sehr einfach herzustellen ist, weil die Seiten keine sich bis über den Seitenrand erstreckende Bedruckung aufweisen und einfach doppelseitig in Lesefolge mit Trennbogen gedruckt werden können. Ein Ausschießen ist ebenfalls nicht erforderlich und somit auch kein Beschneiden. Der zweite Durchlauf erfolgt mit Rückstichheftung. Hierzu müssen vier Seiten auf einem Bogen ausgeschossen werden. Da der mittlere Bogen eine sich bis über den Seitenrand erstreckende Bedruckung aufweist, müssen alle Seiten auf C3-Überformatbogen (324 x 458 mm / 12 x 18 Zoll) gedruckt und dann auf 280 x 440 mm / 11 x 17 Zoll beschnitten werden. Bei diesem Beispiel dienen zahlreiche Varianten dazu, die beiden Durchläufe zu erzeugen. Indem der Druckvorstufenoperator die Varianten in einer Weise nutzen kann, die eine effiziente Produktion der fertigen Dokumente ermöglicht, lassen sich mit der Erfindung erhebliche Zeit- und Kosteneinsparungen erzielen.

Das bevorzugte Ausführungsbeispiel sieht vor, Auswahlkriterien für Falldokumente zwecks weiterer Verarbeitung in eine Liste zu stellen. Im Zusammenhang mit Proof-Aufträgen werden Falldokumente aus der VDP-Familie zur "Weiterverarbeitung" gewählt. Das bedeutet, dass der Proof-Auftrag an die Druckmaschine übergeben wird, um die Ergebnisse zu betrachten. Ein Druckvorstufenoperator nimmt dann auf Basis des Proofs üblicherweise Änderungen an Farbmanagement, Medien oder Layout vor, bevor der gesamte Auftrag zum Druck freigegeben wird. Zunächst wird das erste Falldokumente aus jeder VDP-Familie entnommen, dann wird jedes n-te Falldokument aus jeder VDP-Familie entnommen (n gleich 1 bis 1000), dann werden alle aus einer VDP-Familie ausgewählten Falldokumente hinzugefügt oder gelöscht, dann werden bestimmte Falldokumente hinzugefügt und/oder gelöscht.

Ein Proof-Auftrag ist lediglich eine bestimmte Art eines abgeleiteten Auftrags, wobei die vorliegende Erfindung vorsieht, abgeleitete Aufträge im Wesentlichen als einen von zwei Arten von abgeleiteten Aufträgen zu erzeugen, nämlich manuell und automatisch.

In einem manuellen abgeleiteten Auftrag ist ein Druckvorstufenoperator typischerweise in der Lage, einen VDP-Unterauftrag anhand folgender Faktoren zu erzeugen:
Fertigungsunterschiede, Größe der Auftragspräferenzen oder Notwendigkeit, einige bestimmte Dokumente auszuwählen. Jedes der manuellen Beispiele zur manuellen Erstellung von VDP-Unteraufträgen lässt sich von dem Druckvorstufenoperator durchführen, der über die grafische Benutzeroberfläche 6 die geeignete Wahl innerhalb der Verfahren "VDP-Unterauftragsparameter wählen" 341, 441 trifft.

Der Fachmann auf diesem Gebiet erkennt, dass das Verfahren zur Erstellung von VDP-Unteraufträgen automatisierbar ist. Ein automatisch abgeleiteter Unterauftrag wäre insbesondere in dem Fall wünschenswert, in dem die zum Erstellen eines VDP-Unterauftrags herangezogenen Varianten auf Produktionszwecksparametern beruhen, die normalerweise (aber nicht notwendigerweise) für Proof-Auftragszwecke erzeugt werden. Ein automatisch abgeleiteter Auftrag kann zudem auf den PDF-Inhaltsdifferenzen basieren, die normalerweise (aber nicht notwendigerweise) für Proof-Auftragszwecke erzeugt werden. Ein weiterer automatischer, PDF-basierender, abgeleiteter Auftrag könnte in der Prüfung auf Farbraumdifferenzen bestehen.

Zusammenfassend erzeugt der folgende Ereignisablauf neue Unteraufträge aus den ursprünglichen PPML/VDX-Aufträgen.

Der Druckvorstufenoperator wählt "VDP-Auftrag analysieren".
Der Druckvorstufenoperator wählt "Abgeleiteten Auftrag erzeugen".
Die Softwarekomponente für den Druckvorstufen-Workflow stellt eine grafische Benutzeroberfläche bereit, die automatisch einen Satz von Falldokumenten auswählt, die in den neuen Auftrag einzubringen sind.
Der Druckvorstufenoperator wählt "Neuen Auftrag speichern".

Um das Verfahren "Abgeleiteten Auftrag erstellen" in dem bevorzugten Ausführungsbeispiel auszuführen, wie über die grafische Benutzeroberfläche 6 bereitgestellt, sammelt das System in dem Verfahrensschritt "Neuen Auftrag speichern" alle ausgewählten Falldokumente aus einer Liste in einer neuen PPML/VDX-Datei, zusammen mit allen bezogenen PDF-Inhalten. Die Software ist als ein Acrobat® Plug-in ausführbar und unterstützt alle typischen Acrobat® Dateioperationen (öffnen, schließen, speichern, speichern unter) für *.vdx-Dateien. Das bevorzugte Ausführungsbeispiel sieht die Erkennung der gesamten VDX-Semantik in einer *.vdx-Datei vor.

Die Systemsoftware sieht die Zuordnung zu einer DTD vor. Eine DTD ist eine Datei, die überprüft, ob eine XML (PPML)-Datei richtig formatiert ist und mit dem Verwendungszweck übereinstimmt, wobei der Verwendungszweck hier die Nutzung als PPML/VDX-Datei ist. Eine Alternative zu einer DTD ist ein so genanntes Schema. Es sind diese beiden Verfahren zur Prüfung der Struktur einer PPML/VDX-Datei möglich. Die Systemsoftware stellt zudem die Option bereit, den XML-Bereich der PPML/VDX-Datei auf "valid" (gültig) oder "well-formed" (gut ausgebildet) zu prüfen. Im vorliegenden Ausführungsbeispiel ermöglicht die Systemsoftware nicht die Bearbeitung einer PPML/VDX-Datei aus der Acrobat® Umgebung heraus, wobei allerdings darauf hingewiesen sei, dass Fachleute die Möglichkeit zur Bearbeitung der PPML/VDX-Datei in der Acrobat® Umgebung vorsehen könnten.

Der in Fig. 2 gezeigte Verfahrensschritt "Herstellungszweck definieren" 25 wird von dem Druckvorstufenprozess 20 ausgeführt, um die Produktionsparameter zu definieren, die für die Herstellung des Auftrags nach Verwendungszweck zuständig sind. "Definiere Herstellungszweck" 25 ist eine Funktion, die die Produktionsparameter genau und effizient festlegt, um den Druckauftrag gemäß Spezifikation in einer PPML/VDX-Datei zu drucken und zu bearbeiten. Der Druckvorstufenoperator sollte das Leistungsvermögen der Vorrichtung kennen, um die optimale Art und Weise für Druck und Weiterverarbeitung eines PPML/VDX-Auftrags zu bestimmen. Eine der Funktionen von "Definiere Herstellungszweck" 25 besteht daher in der Abfrage der Druckvorrichtung nach ihren "Herstellungsmöglichkeiten" (im Falle des vorliegenden Ausführungsbeispiels also die NexStation™ 4). Zu den " Herstellungsmöglichkeiten " der Vorrichtung zählen der "Medienkatalog", der "Statische Ausschießvorlagenkatalog" und die "Weiterverarbeitungsmöglichkeiten". Die Kommunikation zwischen der Druckvorstufenkomponente (Druckvorstufenprozess 20) und der Produktionskomponenten für den PPML/VDX-Auftrag (Produktionsprozess 30) stellt eine Liste der verfügbaren Medientypen bereit, die dem Medienkatalog 39 entnommen ist. Der Druckvorstufenoperator ordnet jedes logisch in der VDP-Familie angegebene Medium einem physischen Medientyp zu, wie im Medienkatalog 39 der Vorrichtung gemäß Herstellungsmöglichkeiten aufgeführt. Es wird eine Ausschießvorlage ausgewählt, die jedes Falldokument der VDP-Familie genau und effizient druckt. Eine Ausschießvorlage für eine VDP-Familie lässt sich auf verschiedene Weise angeben:
- Auswahl einer Ausschießvorlage aus dem "statischen Ausschießvorlagenkatalog" der Vorrichtung (im Falle des bevorzugten Ausführungsbeispiels eine NexStation™ 4)
- Keine Angabe einer Ausschießvorlage, womit zugelassen wird, dass die Vorrichtung das Ausschießen nach ihrer Standardvorlage vornimmt
- Zuordnen eines Jobtickets aus dem Dateisystem, das eine "statische Ausschießvorlage enthält"
- Auswählen von Parametern zur Angabe einer einfachen (einseitigen) "statischen Ausschießvorlage"

Die Wahl einer statischen Ausschießvorlage für eine VDP-Familie umfasst die Berücksichtigung der Zuordnung der logisch angegebenen Medien und Weiterverarbeitungsspezifikationen in der PPML/VDX-Datei bezüglich des physischen Leistungsvermögens der Vorrichtung. PPML/VDX-Seiten müssen einen logischen Mediennamen tragen (wie z.B. "Formbrief", "Einlagel" oder "Bevorzugter Papiertyp"), den der Druckvorstufenoperator einem bestimmten Papier in dem Medienkatalog der Vorrichtung gemäß Übereinkunft zwischen ihm und dem Hersteller des PPML/VDX-Auftrags festlegt (wie z.B. "Hammermill #06200-8"). Die VDP-Familie kann eine logisch angegebene Weiterverarbeitungsanforderung umfassen (z.B. "Sattelheftung" oder "Klebebindung"), die wiederum der physischen Weiterverarbeitungsfunktion der Vorrichtung zugeordnet und in einem Adobe® Jobticket definiert werden muss. Die Anzahl der von jedem Falldokument zu erstellenden Exemplare in der VDP-Familie ist ebenfalls zu berücksichtigen. Es gibt Fälle (z.B. Visitenkarten, Postkarten), in denen mehrere Kopien desselben Falldokuments in gleicher Lage ausgeschossen werden sollen. Die Zuordnung einer statischen Ausschießvorlage und eines Jobtickets weist die Vorrichtung an, die VDP-Familie genau und effizient zu produzieren.

Die Systemsoftware der vorliegenden Erfindung ist in der Lage, die Produktionsparameter eines PPML/VDX-Auftrags zu definieren, indem die gesamte Datei als eine einzige Familie behandelt wird. Diese Funktionalitätsebene wird in Verbindung mit dem Vermögen betrachtet, einen Auftrag mit mehreren VDP-Familien in Unteraufträge mit je einer VDP-Familie zu unterteilen. Die Funktionalität zur Behandlung des PPML/VXD-Auftrags als eine einzelne Datei ermöglicht die Produktion eines PPML/VDX-Auftrags als Einzeldatei mit mehreren VDP-Familien.

Sobald die PPML/VDX-Datei von der Druckvorstufenkomponente (Druckvorstufenprozess 20) geöffnet worden ist, erhält der Druckvorstufenoperator die Ergebnisse des Verfahrens "VDP-Auftrag analysieren" 22. Um die Produktionsparameter zu definieren, wählt der Druckvorstufenoperator eine Vorrichtung (im bevorzugten Ausführungsbeispiel NexStation™ 4) und fragt die Vorrichtung (NexStation™ 4) nach ihren Herstellungsmöglichkeiten ab. Sobald die Herstellungsmöglichkeiten abgefragt worden ist, wählt der Druckvorstufenoperator eine VDP-Familie aus der durch das Verfahren "VDP-Auftrag analysieren" 22 erzeugten Liste, um die nötigen Produktionsparameter zur Herstellung der Untermenge des PPML/VDX-Auftrags zu bestimmen.

Eine Kommunikationsschnittstelle zwischen dem Druckvorstufenprozess 20 und dem Produktionsprozess 30 ermöglicht dem Druckvorstufenoperator die Zuordnung der in der VDP-Familie spezifizierten logisch angegebenen Medien und Weiterverarbeitungsoptionen zu einem physischen Medium und einer Weiterverarbeitungsoption, wie von den Herstellungsmöglichkeiten der Vorrichtung unterstützt.

Nach Prüfen aller ausgewählten Produktionsparameter kann der Druckvorstufenoperator die Auswahl für diese VDP-Familie annehmen. Das Ergebnis der Produktionsparameterauswahl wird dann an ein Jobticket übergeben, das den Herstellungszweck der Produktionsparameter beschreibt und angibt, auf welche Falldokumente in dem PPML/VDX-Auftrag dieser Satz von Produktionsparametern anzuwenden ist. Es sei darauf hingewiesen, dass in dem bevorzugten Ausführungsbeispiel das Jobticket-Format PJTF oder JDF ist, wobei jedoch auch andere Formate verwendbar sind, wie Fachleuten selbstverständlich klar sein wird.

Die vorausgehenden Schritte werden dann für jede VDP-Familie von dem Verfahrensschritt "VDP analysieren" wiederholt. Der Druckvorstufenoperator bestätigt dann, dass alle VDP-Familien einwandfrei für die Produktion spezifiziert sind. Laufende Bearbeitungsvorgänge von Jobtickets werden abgeschlossen. Der PPML/VDX-Auftrag ist dann zur Übergabe bereit.

Das Verfahren "Herstellungszweck definieren" greift auf Systemsoftware zu, um die Ergebnisse der Routine "VDP-Auftrag analysieren" 22 auf der grafischen Benutzeroberfläche 6 darzustellen, worauf der Druckvorstufenoperator in der Lage ist, alle erforderlichen Produktionsparameter für jede VDP-Familie anzugeben. Die Liste der erforderlichen Parameter für jede VDP-Familie aus den Angaben zu den Herstellungsmöglichkeiten, wie von der ausgewählten NexStation™ angegeben, lautet folgendermaßen: Anzahl der zu produzierenden Exemplare jedes Falldokuments in der VDP-Familie; vorgegebener physischer Medientyp für alle PPML/VDX-Seiten, denen kein logischer Medientyp explizit zugeordnet worden ist; physischer Medientyp für jeden angegebenen logischen Medientyp; statische Ausschießvorlage und Weiterverarbeitungsfunktion.

Die Systemsoftware fordert den Druckvorstufenoperator auf, zu bestätigen, das die Auswahl der Produktionsparameter für alle VDP-Familien abgeschlossen ist. Es ist daher nicht erforderlich, alle VDP-Familien zur Produktion auszuwählen. Die Systemsoftware überträgt die bestätigte Auswahl der Produktionsparameter für sämtliche VDP-Familien in Adobe® Jobtickets, die im bevorzugten Ausführungsbeispiel auf PJTF basieren, wobei es Fachleuten selbstverständlich klar sein ist, dass auch andere Datenstrukturen verwendbar sind, wie beispielsweise JDF. Die Systemsoftware unterstützt regelbasierendes Verknüpfen von Jobtickets, nachdem ein Jobticket bereits von einem vorherigen Prozess in einen PPML/VDX-Auftrag eingestellt worden ist. Die Systemsoftware bettet das oder die zugeordneten Adobe® Jobtickets in der PPML/VDX-Datei ein, wie von Adobe® für PDF-Dateien angegeben.

Auftragsübergabe 27 ist ein Verfahrensschritt, der es dem Druckvorstufenoperator ermöglicht, die PPML/VDX-Datei zu öffnen und die gewünschten Maßnahmen durchzuführen, bevor er die PPML/VDX-Datei an den Produktionsprozess 30 übergibt. Auftragsübergabe 27 übergibt den Auftrag im PPML/VDX-Format an die Druckvorrichtung, nachdem der Druckvorstufenoperator sämtliche Operationen für den VDP-Auftrag durchgeführt hat. Im bevorzugten Ausführungsbeispiel erfolgt der Verfahrensschritt Auftragsübergabe 27 als einfacher Dateiaustausch. Das bevorzugte Ausführungsbeispiel implementiert eine einzelne Datei, die alle PPML-Angaben, bezogenen PDF-Objekte und ggf. zugeordnete Jobtickets enthält. In anderen Implementierungen, die die Übergabe mehrerer Dateien ermöglichen, ist jedoch auch vorgesehen, dass die PPML-Datei Bezug auf PDF-Objekte in einer externen Datei nimmt.

Der Verfahrensschritt Auftragsübergabe 27 beginnt damit, dass der Druckvorstufenoperator die zu verwendende Druckvorrichtung wählt, bei der es sich in dem bevorzugten Ausführungsbeispiel um die NexStation™ 4 handelt, wobei jedoch auch andere Vorrichtungen unterstützt werden können. Wenn beispielsweise alle Seiten in einem Auftrag in schwarzweiß gedruckt werden sollen, dann würde ein Schwarzweißdrucker die bevorzugte Vorrichtung sein. Im Druckvorstufenbereich meldet sich der Druckvorstufenoperator bei der Vorrichtung an, je nach Konfiguration der Vorrichtung, und wählt "Druckeigenschaften", um auf die geräteabhängigen Eigenschaften zuzugreifen. Die gewünschten Druckparameter werden ausgewählt und bestätigt (wie die PPD). Die ausgewählten Parameter werden dann zum Adobe® Jobticket hinzugefügt, das in der PPML/VDX-Datei eingebettet ist. Wenn für die PPML/VDX-Datei bereits ein Jobticket definiert ist, werden die neuen Parameter mit der vorhandenen Datenstruktur verknüpft. Wenn zuvor kein Jobticket vorhanden war, wird eines erstellt und hinzugefügt. Der Druckvorstufenoperator wählt "Drucken", worauf die gewählte Vorrichtung die PPML/VDX-Datei entgegen nimmt, die Verknüpfung des Jobtickets vornimmt, den Auftrag rastert und weiterverarbeitet. Alternativ hierzu lässt sich die Datei für das Drucken zu einem späteren Zeitpunkt austauschen, wobei die gewünschte Vorrichtung wählbar ist.

Mit Kenntnis des Auftrags und der Druckvorrichtung überstellt der Druckvorstufenoperator die PPML/VDX-Datei einfach an einen vorbestimmten und bereinigten virtuellen Drucker, der auf der Vorrichtung erzeugt worden ist (wie der NexStation™ 4). In der PPML/VDX-Datei kann zum Zeitpunkt der Übergabe an die NexStation™ 4 ein Jobticket eingebettet sein.

In dem bevorzugten Ausführungsbeispiel unterstützt und integriert das System eine NexStation™ 4 Druckvorrichtung sowie eine grafische Benutzeroberfläche 6, um einen NexStation™ 4 Druckertreiber auszuführen und zu unterstützen. Die grafische Benutzeroberfläche 6 ermöglicht die Auswahl und Übergabe des PPML/VDX-Auftrags an die gewählte Druckvorrichtung (NexStation™ oder andere Druckvorrichtung). Die Erfindung sieht eine vom System bereitgestellte Navigation im Netz vor, um vorhandene virtuelle Drucker oder andere Druckvorrichtungen für die NexStation™ 4 zu orten. Die Erfindung sieht zudem zukünftige Nachdrucke vor, indem die Druckvorrichtung von dem Jobticket auswählbar ist, so dass der Auftrag in identischer Weise reproduzierbar ist. Bei Wahl eines Befehls "Drucken" stellt die Systemsoftware die ausgewählte PPML/VDX-Datei in die Eingangswarteschlange der gewählten NexStation™ oder einer anderen Druckvorrichtung.

### Bezugszeichen

- 2: digitales Drucksystem
- 3: Druckvorrichtung
- 4: NexStation™
- 5: Eingabevorrichtung
- 6: grafische Bedienerschnittstelle (GUI)
- 10: Erstellen
- 12: VDP-Satzherstellung
- 14: Verknüpfen
- 16: Empfängerdatenbank
- 18: Inhaltsobjekte
- 20: Druckvorstufe
- 22: VDP-Auftrag analysieren
- 23: VDP-Auftrag einsehen
- 25: Herstellungszweck definieren
- 27: Auftragsübergabe
- 30: Produktion
- 32: Rasterbildprozessor (RIP)
- 34: Weiterverarbeitung
- 36: Druck
- 38: Ausschießvorlage
- 39: Medienkatalog

- 100; 110; 120; 130; 140;: Verfahrensschritt
- 150; 151; 160; 170; 180;: Verfahrensschritt
- 210; 220; 221; 225; 230;: Verfahrensschritt
- 231; 235;: Verfahrensschritt
- 250: Verfahren "VDP analysieren"
- 251;: Verfahrensschritt
- 300: Verfahren zur Erstellung dynamischer Ausschießvorlagen
- 302; 304; 305; 306; 307;: Verfahrensschritt
- 308; 309; 316; 317; 318;: Verfahrensschritt
- 319; 320, 322; 324; 330;: Verfahrensschritt
- 335; 340; 341; 342; 343;: Verfahrensschritt
- 350;: Verfahren "Abgeleiteten Auftrag erstellen"
- 351; 352: Verfahrensschritt
- 420; 430; 435; 441; 443;: Verfahrensschritt
- 450: Verfahren "Abgeleiteten Auftrag erstellen"
- 451; 452: Verfahrensschritt

## Patentansprüche

1. Verfahren zum Erzeugen eines Druckauftrags mit variablen Druckdaten, das folgende Schritte umfasst:
Bereitstellen eines Auftrags mit variablen Druckdaten, der eine Vielzahl zu druckender Dokumente enthält, worin jedes aus der Vielzahl der Dokumente eine Vielzahl von Varianten enthält, die Elemente bezüglich des Inhalts, des Layouts und des Produktzwecks enthalten;
Erstellen einer Vielzahl von Gruppen, wobei die Gruppen durch eine Übereinstimmung der Varianten bestimmt sind, die sich auf das Layout und auf den Produktzweck beziehen;
Auswählen mindestens eines Parameters aus den Varianten und Erzeugen einer Vielzahl von Untergruppen aus den Gruppen gemäß der Parameter; und
Anordnen der Untergruppen zum Drucken gemäß der Parameter aus dem Auswahlschritt.

2. Verfahren nach Anspruch 1,
**dadurch gekennzeichnet,**
**dass** der Auswahlschritt zudem das Auswählen eines Bereichs der Varianten als Parameter umfasst.

3. Verfahren nach Anspruch 2,
**dadurch gekennzeichnet,**
**dass** der Auswahlschritt zudem umfasst, dass das Auswählen als Parameterbereich eine der folgenden Varianten umfasst, ausgewählt aus: Seitenzahl, Medienfolge, Überschreiten des Bildbereichs, Anzahl Exemplare, Weiterverarbeitung, Ausrichtungsfolge oder Layoutfolge.

4. Verfahren nach einem der Ansprüche 1 bis 3,
**dadurch gekennzeichnet,**
**dass** der Auswahlschritt zudem das manuelle Auswählen der Parameter über eine Benutzeroberfläche (6) umfasst.

5. Verfahren nach einem der Ansprüche 1 bis 4,
**dadurch gekennzeichnet,**
**dass** die Schritte zum Erstellen, Auswählen und Anordnen durchführbar sind, bis die Untergruppen innerhalb einer vorbestimmten Größe liegen.

6. Verfahren nach Anspruch 5,
**dadurch gekennzeichnet,**
**dass** die vorbestimmte Größe automatisch bestimmbar ist.

7. Verfahren nach einem der Ansprüche 5 bis 6,
**dadurch gekennzeichnet,**
**dass** die vorbestimmte Größe manuell über eine Benutzeroberfläche (6) bestimmbar ist.

8. Verfahren nach einem der Ansprüche 1 bis 7,
**dadurch gekennzeichnet,**
**dass** der Auswahlschritt zudem das automatische Auswählen des Parameters aus dem Inhalt umfasst.

9. Verfahren nach Anspruch 8,
**dadurch gekennzeichnet,**
**dass** der Parameter aus dem Inhalt ein Profil entweder von Farbe, Größe oder Dichte ist.

10. Vorrichtung zum Erzeugen eines Druckauftrags mit variablen Druckdaten, das Folgendes umfasst:
ein System (2) mit einem Verarbeitungselement (4), das derart konfiguriert ist, dass es einen Auftrag mit variablen Druckdaten enthält, der eine Vielzahl von zu druckenden Dokumenten enthält, worin jedes aus der Vielzahl der Dokumente durch eine Vielzahl von Varianten bestimmt ist, die Elemente bezüglich des Inhalts, des Layouts und des Produktzwecks enthalten;
einen auf dem Verarbeitungselement (4) ausführbaren Algorithmus, der die Varianten lesen kann und daraus eine Vielzahl von Gruppen erzeugen kann, wobei die Gruppen durch eine Übereinstimmung der Varianten bestimmt sind, die sich auf das Layout und auf den Produktzweck beziehen;
einen Auswahlmechanismus, der mit dem Verarbeitungselement (4) gekoppelt ist, zum Auswählen mindestens eines Parameters aus den Varianten und Erzeugen einer Vielzahl von Untergruppen aus den Gruppen gemäß der Parameter; und
eine Ausgabevorrichtung (3), die die Vielzahl von Untergruppen gemäß der Parameter aus dem Auswahlschritt ausgibt.

11. Vorrichtung nach Anspruch 10,
**dadurch gekennzeichnet,**
**dass** der Auswahlmechanismus zudem das Auswählen eines Bereichs der Varianten als Parameter umfasst.

12. Vorrichtung nach Anspruch 11,
**dadurch gekennzeichnet,**
**dass** der Parameterbereich zudem eine der folgenden Varianten umfasst, ausgewählt aus: Seitenzahl, Medienfolge, Überschreiten des Bildbereichs, Anzahl Exemplare, Weiterverarbeitung, Ausrichtungsfolge oder Layoutfolge.

13. Vorrichtung nach einem der Ansprüche 10 bis 12,
**dadurch gekennzeichnet,**
**dass** der Auswahlmechanismus zudem eine Benutzeroberfläche (6) umfasst.

14. Vorrichtung nach einem der Ansprüche 10 bis 13,
**dadurch gekennzeichnet,**
**dass** der Auswahlmechanismus gemäß dem Parameter arbeitet, bis die Untergruppen innerhalb einer vorbestimmten Größe liegen.

15. Vorrichtung nach Anspruch 14,
**dadurch gekennzeichnet,**
**dass** die vorbestimmte Größe automatisch durch das Verarbeitungselement (4) bestimmbar ist.

16. Vorrichtung nach einem der Ansprüche 14 bis 15,
**dadurch gekennzeichnet,**
**dass** die vorbestimmte Größe manuell über eine Benutzeroberfläche (6) bestimmbar ist.

17. Vorrichtung nach einem der Ansprüche 10 bis 16,
**dadurch gekennzeichnet,**
**dass** der Auswahlmechanismus zudem Mittel umfasst, derart, dass das Verarbeitungselement (4) automatisch den Parameter aus dem Inhalt der Dokumente auswählt.

18. Vorrichtung nach Anspruch 17,
**dadurch gekennzeichnet,**
**dass** der Parameter aus dem Inhalt ein Profil entweder von Farbe, Größe oder Dichte ist.
